Europäisches Patentamt

European Patent Office

Office européen des brevets

(19)

(11) EP 1 227 659 A1

(12) **EUROPÄISCHE PATENTANMELDUNG**

(43) Veröffentlichungstag:
**31.07.2002 Patentblatt 2002/31**

(51) Int Cl.$^7$: **H04N 1/60**

(21) Anmeldenummer: **01101128.5**

(22) Anmeldetag: **19.01.2001**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(71) Anmelder: **GRETAG IMAGING Trading AG**
**5430 Wettingen (CH)**

(72) Erfinder:
• **Meier, Roland**
  **5000 Aarau (CH)**
• **Zolliker, Peter**
  **8157 Dielsdorf (CH)**

(74) Vertreter: **Schwabe - Sandmair - Marx**
**Stuntzstrasse 16**
**81677 München (DE)**

(54) **Farbmodellierung eines Fotobildes**

(57) Ein Modell für ein System aus einer Bilddarstellungsvorrichtung und einem Medium, das ein Bild mittels Lichtmodulatoren erzeugt, wird bereitgestellt. Durch das Modell wird eine Beziehung zwischen Bildsteuerdaten und Lichtmodulationswerten beschrieben. Eine Beziehung zwischen den Lichtmodulationswerten und den Modulations-Farbwerten wird durch einen modellierten Lichteinfall auf die Lichtmodulatoren hergestellt.

Fig. 2: erstes Verfahren

**Beschreibung**

Die vorliegende Erfindung betrifft das Modellieren fotografischer Bilder, die in Form von Lichtmodulatoren dargestellt werden. Bei Lichtmodulatoren handelt es sich beispielsweise um Farbstoffe oder Interferenzfilter, wobei die Lichtdurchlässigkeit durch die Interferenzfilter beispielsweise mit Flüssigkristallen steuerbar ist. Lichtmodulatoren modulieren oder ändern die Intensität des einfallenden Lichts und modulieren oder ändern das Spektrum des einfallenden Lichts. Lichtmodulatoren reflektieren, absorbieren und/oder transmittieren das einfallende Licht, wobei das einfallende Licht wellenlängenabhängig reflektiert, absorbiert und/oder transmittiert wird. Absorptions-, Reflexionswie auch Transmissionseigenschaften sind im Allgemeinen wellenlängenabhängig.

Die vorliegende Erfindung betrifft insbesondere ein Verfahren, um zu modellieren, wie ein Bild für einen Betrachter oder ein Messgerät mit mehreren, definierten Farbkanälen aussieht, wobei das Bild durch ein Bilddarstellungssystem hergestellt wird, das das Bild mittels Lichtmodulatoren erzeugt und das durch gegebene Bildsteuerdaten angesteuert wird. Dabei können die Bildsteuerdaten direkt die Lichtmodulatoren (z.B. die Elemente eines LCD-Displays) ansteuern oder indirekt die Generierung von Lichtmodulatoren bewirken (z.B. die Generierung von Farbstoffen durch Ansteuern einer Belichtungseinheit mit den Bildsteuerdaten, wobei die Belichtungseinheit Fotopapier belichtet). Die Erfindung betrifft auch ein dazu inverses Verfahren, das bei einem gegebenen Bild berechnet, wie ein Bilddarstellungssystem anzusteuern ist, um das Bild zu erzielen.

Die vorliegende Erfindung findet insbesondere bei Bilddarstellungssystemen Anwendung, die aus Bilddarstellungsvorrichtungen und einem Medium bestehen, wobei die Bilddarstellungsvorrichtung insbesondere die Lichtmodulatoren in dem Medium erzeugt oder auf dieses aufbringt. Dabei kann das Medium reflektiv und/oder transmittiv sein und das Bild somit in Reflexion oder Transmission betrachtet werden.

Die Erfindung betrifft auch Bilddarstellungssysteme, bei denen die Lichtmodulatoren nicht erzeugt werden, sondern bereits zu Beginn ihre Lichtmodulationseigenschaften aufweisen und zur Bilddarstellung angeordnet sind, wie dies beispielsweise bei einem Feld aus Interferenzfiltern gekoppelt mit Lichtintensitätsmodulatoren (beispielsweise Flüssigkristallen oder LCD-Display) der Fall ist.

Die vorliegende Erfindung betrifft insbesondere die Farbmodellierung eines auf einem Medium (z.B. Fotopapier oder mit Farbe bedruckbares Normalpapier) mittels Farbstoffen dargestellten Fotobildes und insbesondere die Anwendung des Modells bei einem (ersten) Verfahren, das auf Grund gegebener Bildsteuerdaten die Farbwerte des Fotobildes bestimmt, die die Farbwerte des vom Bild reflektierten transmittierten und/oder absorbierten Lichts beschreiben, sowie ein (zweites) Verfahren, das bei gegebenen Farbwerten eines Bildes die zugehörigen Bildsteuerdaten ermittelt. Die Bildsteuerdaten dienen zur Steuerung einer Bilddarstellungsvorrichtung, die ein Bild auf einem Fotobild-Medium mittels Farbstoffen erzeugt. Die Farbwerte beschreiben insbesondere die von einem (Standard-)Menschen wahrgenommenen Farben des Bildes, wobei das Bild z.B. in Reflexion oder Transmission betrachtet wird. Mittels den Farbwerten werden Spektren durch diskrete Werte dargestellt. Üblicherweise werden entsprechend dem menschlichen Auge drei Werte verwendet. Die Farbwerte werden aus den Spektren durch Falten mit Funktionen gewonnen, die z. B. die Empfindlichkeitskurven des menschlichen Auges darstellen. Sie können aber auch durch Faltung mit anderen Funktionen gewonnen werden, wie z.B. bei der Gewinnung von ANSI-A-Farbwerten. Die dabei verwendeten Funktionen sind schmalbandiger als die Empfindlichkeitskurven des menschlichen Auges und entsprechen insbesondere den Empfindlichkeitskurven eines Farbdichtemessgeräts. Beide Verfahren beruhen auf dem gemeinsamen Farbmodell für das Fotobild und stellen jeweils die Durchführung des anderen Verfahrens in umgekehrter Richtung dar. Die Erfindung betrifft weiter ein dem erfindungsgemäßen Verfahren entsprechendes Programm, ein Speichermedium mit dem Programm sowie einen Drucker bzw. Printer, der nach den erfindungsgemäßen Verfahren arbeitet sowie ein Fotolabor, insbesondere Minilab wie auch Großlabor und Geräte für Großlabor, das die erfindungsgemäßen Verfahren einsetzt. Die Erfindung betrifft insbesondere das Gebiet der Fotografie, Verarbeitung von fotografischen Daten und Fotolabors.

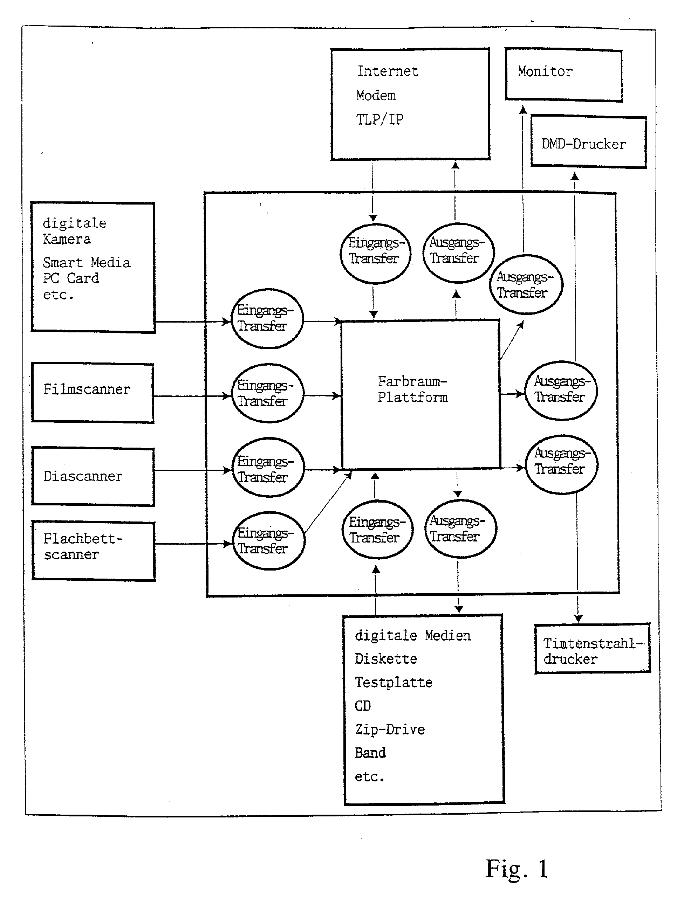

Heutige Fotolabors, insbesondere sog. digitale Minilabs, die eine kompakte Ausführung eines Fotolabors auf einer kleinen Fläche (typischerweise kleiner als wenige Quadratmeter oder ein Quadratmeter) darstellen, sind multifunktional. Sie empfangen Daten über verschiedene Eingabekanäle und verteilen Ausgangsdaten auf eine Ausgabevorrichtung oder mehrere Ausgabevorrichtungen. Ein Beispiel für den vernetzten Datenstrom und Informationsstrom eines Minilabs zeigt die Fig. 1. Einige der Eingabe/Ausgabevorrichtungen können nur eingegebene Informationen bzw. eingegebene Daten handhaben (z.B. ein Scanner für Filme bzw. Negativfilme) oder nur ausgehende Daten bzw. Informationen handhaben (z.B. ein Drucker). Andere Vorrichtungen unterstützen den Datenfluss in beide Richtungen und dienen sowohl als Eingabe- als auch als Ausgabevorrichtungen (z.B. das Schreiben oder Lesen einer CD oder den Datentransfer über ein Netzwerk oder das Internet).

Jede Eingabevorrichtung und Ausgabevorrichtung handhabt die in den Bildern vorhandene Farbinformation auf eine andere Weise, die für die Vorrichtung spezifisch ist. Dadurch ergeben sich Probleme bei der Konversion der Farbinformation beim Austausch der Bilddaten zwischen den Vorrichtungen. Es ist bekannt, zur Lösung derartiger Probleme einen sog. ICC-(International Color Consortium)-Standard zu verwenden, der als eine Plattform zur Konversion der Farbdaten dient. Ziel ist es dabei, die vorrichtungsspezifischen Farbdaten in einen vorrichtungsunabhängigen Farbraum zu konvertieren, von dem aus dann wiederum in andere vorrichtungsspezifische Farbräume transformiert werden kann. Entsprechendes ist z.B. in dem Artikel "Color Management: Current Practice and the Adoption of a New Standard" von Michael Has und Todt Newman geschrieben, der unter der Internetadresse http://www.color.org/wpaper1.html beschrieben ist. Zur Erzeugung sog. ICC-Profile, die eine Transformation von einem vorrichtungsspezifischen Farbraum in den vorrichtungsunabhängigen Farbraum erlauben, wird die jeweilige Vorrichtung als Black Box angesehen und anhand einer Vielzahl von Farbmustern, die von einer Vorrichtung erzeugt werden oder verarbeitet werden, wird ein Profil erzeugt. Die Erzeugung der ICC-Profile ist dadurch sehr aufwändig.

Jede Änderung im System, das die Black Box beschreibt, erfordert ein neues Erstellen des Profils. Eine Änderung im System ist beispielsweise eine Änderung der Maximaldichte des Papiers infolge einer Änderung der Papierentwicklung.

Die Erfinder der vorliegenden Anmeldung haben herausgefunden, dass eine Farbraumplattform zur Konvertierung der Daten zwischen den verschiedenen Eingabe- und Ausgabevorrichtungen auch auf dem Gebiet der Fotolabors, insbesondere Minilabs wie auch Großraumlabors, von Vorteil wäre. Die Anwendung des ICC-Prinzips erwies sich jedoch als zu aufwändig, um zu guten Ergebnissen bei der Farbbilderzeugung zu gelangen. Insbesondere sind eine Vielzahl von Messungen erforderlich, um Profile mit der notwendigen Genauigkeit zu erstellen.

Aufgabe der Erfindung ist es, Bilddaten zur Farbbilderzeugung derartig zu verarbeiten, dass die Konversion zwischen einem gegebenen Systemplattform-Farbraum und einem vorrichtungsspezifischen Farbraum vereinfacht wird.

Vorstehende Aufgabe wird durch die Gegenstände der Ansprüche 1, 2, 12, 13, 14, 16 und 17 gelöst. Vorteilhafte Weiterbildungen gehen aus den abhängigen Ansprüchen hervor.

Erfindungsgemäß soll insbesondere für ein Labor oder Minilab ein Farbraum vorgegeben werden, der als Plattform für Farbraumtransformationen und somit entweder als Ausgangspunkt oder Endpunkt einer Farbraumtransformation dienen soll. Um den Messaufwand bei der Erstellung eines Profils zur Transformation von einem Farbraum zum nächsten Farbraum zu vermindern, wird im Gegensatz zum Stand der Technik das Bilddarstellungssystem, das die Farbraumtransformation impliziert bzw. bewirkt, nicht als Black Box behandelt, sondern modelliert. Dadurch muss z.B. bei einer Änderung im System nur ein Parameter (oder wenige) des Modells angepasst werden.

Bei einer Bilddarstellungsvorrichtung, die Bestandteil des Bilddarstellungssystems ist, handelt es sich beispielsweise um eine Vorrichtung, die in oder auf einem Medium Farbstoffe erzeugt, um so durch Reflexion von Licht an dem Medium ein Bild für einen Betrachter in Erscheinung zu bringen. Derartige Systeme aus Bilddarstellungsvorrichtung, Medium und Farbstoffen werden im Folgenden auch als Farbstoff-Systeme bezeichnet und stellen ein Beispiel für ein Bilddarstellungssystem dar. Bei Farbstoff-Systemen handelt es sich also insbesondere um Drucker oder Printer, die z.B. Farbstoffe auf ein Medium aufbringen (z.B. Farbtoner bei elektrofotografischen Druckern, z.B. Laserdruckern, oder Farbtinte bei Tintenstrahldruckern) oder um Vorrichtungen, die in dem Medium Farbstoffe erzeugen, wie z.B. bei Thermofarbdruckern oder bei Belichtung von lichtempfindlichen Medien (z.B. Fotopapier) Farbstoffe erzeugen, z.B. mittels Lasern, Kathodenstrahlen, Lichtleitern oder DMDs (Digital Mirror Devices). Bei den Medien (Fotobild-Medien) kann es sich z.B. um Papier, Folien oder andere mehrschichtige Materialien handeln.

Gemäß der Erfindung wird ein Modell bereitgestellt, das es zum einen erlaubt, zu modellieren, wie ein Bild bei gegebenen Bildsteuerdaten, die die Bilderzeugung steuern sollen, nach der Erzeugung mit einem Farbstoff-System aussehen würde. Zum anderen erlaubt das Modell zu berechnen, welche Bildsteuerdaten zur Steuerung der Bilderzeugung erforderlich sind, um ein gegebenes Bild zu erzielen.

Für die Lichtmodulatoren wurden bereits Beispiele wie Farbstoffe und Interferenzfilter gegeben. Im folgenden wird anstelle von Lichtmodulatoren beispielhaft von Farbstoffen gesprochen. Die Lichtmodulationswerte beschreiben die Lichtmodulation durch die Lichtmodulatoren. Die Lichtmodulationswerte stehen vorzugsweise in direktem oder funktionalen Zusammenhang mit charakteristischen (modellierten) physikalischen Eigenschaften des Bilddarstellungssystems, die die Lichtmodulation beschreiben. Insbesondere ist der Lichtmodulationswert ein Maß dazu, wie stark ein bestimmter Lichtmodulator zur gesamten Lichtmodulation beiträgt. Ein Lichtmodulationswert beschreibt beispielsweise die Stärke der Farbstoffbildung im Fotopapier oder die Konzentration des erzeugten Farbstoffes. Der Lichtmodulationswert kann auch die Reflexionseigenschaft des Mediums berücksichtigen, in oder auf dem sich der Farbstoff befindet.

Erfindungsgemäß werden die Lichtmodulationswerte basierend auf einem Modell berechnet; das die Antwort eines Bilddarstellungssystems auf Bildsteuerdaten modelliert, das im Folgenden deshalb auch als "Modell-Bilddarstellungssystem" bezeichnet wird. Ein Vorteil der Erfindung liegt also darin, dass überlegt wird, wie ein Bilddarstellungssystem die Lichtmodulationswerte in Antwort auf Bildsteuerdaten erzeugt. Zur Modellierung werden deshalb vorzugsweise auch die entsprechenden Erzeugungseigenschaften des Bilddarstellungssystems mit herangezogen.

Die Lichtmodulationswerte sind insbesondere Werte, die in direktem Zusammenhang mit Steuerwerten, wie bzw. Farbstoffsteuerwerten, stehen, die die Modulationsstärke der Lichtmodulatoren steuern bzw. bestimmen. Die Modulationseigenschaften der Lichtmodulatoren (z.B. Farbstoffe) können spektral vermessen werden und spielen insbesondere bei der Bestimmung der Modulationsfarbwerte (des modellierten Bildes) aus den Lichtmodulationswerten (z.B. Farbstoffkonzentrationen) eine Rolle. Die Lichtmodulationswerte beschreiben insbesondere die intensitäts-abhängige oder gewichtungs-abhängige Antwort des Bilddarstellungssystems auf die eingegebenen Bildsteuerdaten. Die Lichtmodulationswerte haben die Eigenschaft, dass für geeignet transformierte Lichtmodulationseigenschaften (z. B. spektrales Verhalten der Farbstoffe) insbesondere die folgenden Bedingungen erfüllt sind:

Für jeden Lichtmodulator mit zugehörigem, gegebenem Lichtmodulationswert gibt es vorzugsweise eine eindeutig bestimmte transformierte Lichtmodulationseigenschaft, welche unabhängig ist von den anderen Lichtmodulationswerten. Weiter gibt es vorzugsweise eine eindeutige Vorschrift, wie aus gegebenen Lichtmodulationswerten verschiedener Lichtmodulatoren und den zugehörigen, transformierten Lichtmodulationseigenschaften neue transformierte Lichtmodulationseigenschaften generiert werden können, die einer Kombination von Lichtmodulationswerten entsprechen. Die resultierende Lichtmodulationseigenschaft kann durch Rücktransformation der transformierten Lichtmodulationseigenschaft bestimmt werden. Insbesondere muss die oben beschriebene Transformation der Lichtmodulationseigenschaften innerhalb des Anwendungsbereichs umkehrbar sein.

Insbesondere kann die Vorschrift, wie für ein Set von gegebenen Lichtmodulationswerten die zugehörige transformierte Lichtmodulationseigenschaft ermittelt wird, aus einer Linearkombination bestehen, bei welcher die transformierten Lichtmodulationseigenschaften der einzelnen Lichtmodulatoren mit den zugehörigen Lichtmodulationswerten gewichtet werden. Verfeinerungen des Modells können sowohl die Linearität wie auch die Unabhängigkeit im transformierten Raum durchbrechen, indem beispielsweise (kleine) Korrekturen in Abhängigkeit aller oder mehrerer Lichtmodulationswerte eingeführt werden.

Werden die eingegebenen Bildsteuerdaten beispielsweise durch einen bestimmten Typ eines Lichtmodulators oder durch dessen spektrale Eigenschaften exakt wiedergegeben, so können die Lichtmodulationswerte in proportionalem Zusammenhang mit der durch die Bildsteuerdaten beschriebenen Farbintensität gebracht werden.

Bevor die Erfindung im Folgenden noch weiter beschrieben wird, werden im Folgenden noch einmal die hierin verwendeten Begriffe erläutert. Bei Lichtmodulatoren handelt es sich um gegenständliche Einrichtungen, wie z.B. LCD-Displays oder Flüssigkristalle oder um gegenständliche Stoffe, wie z.B. Farbstoffe, die Licht hinsichtlich seiner Intensität und/oder hinsichtlich seines Spektrums modulieren. "Lichtmodulationswerte" sind beispielsweise Farbstoffkonzentrationen. Allgemeiner stellen sie Gewichtungsfaktoren in einem geeignet transformierten Raum dar. In diesem Raum können die einzelnen Lichtmodulatoren (z.B. Farbstoffe) insbesondere als voneinander entkoppelte Größen behandelt werden. Dadurch können durch eine eindeutige Vorschrift neue Spektren generiert werden. Lichtmodulationswerte sind mathematische Werte oder Daten, die in die Modellberechnung eingehen. Der Begriff "Modulationsstärke" oder der entsprechende Begriff "Modulationsintensität" beschreibt das dem Lichtmodulationswert zu Grunde liegende physikalische Phänomen, nämlich die Stärke, mit der das Licht moduliert und damit geändert wird. Die Änderung des Lichts zeigt sich insbesondere in einer geänderten Intensität und einem geänderten Spektrum. Der Begriff "Steuerwerte" bezeichnet die in ein Bilddarstellungssystem eingegebenen Steuerdaten, wobei auf Grund dieser Steuerdaten die Bilddarstellung erfolgt. Die Steuerwerte werden hierin deshalb auch als "Bildsteuerwerte" oder "Bildsteuerdaten" bezeichnet. Im Falle der Darstellung des Bildes mit Farbstoffen werden sie auch als "Farbstoffsteuerwerte" bezeichnet. Ein Beispiel für "Steuerwerte" stellen die RGB-Werte dar, die in einen Drucker eingegeben werden. Bei den hierin bezeichneten "Farbwerten" handelt es sich insbesondere um ein endliches Set von skalaren Größen (typischerweise drei, beispielsweise kleiner 10), die durch Falten des Reflexionsspektrums mit Empfindlichkeitskurven entstehen. Beispiele sind CIE Lab, Status ANSI-A-Dichten usw. Die "Lichtmodulationseigenschaften" beschreiben beispielsweise das spektrale Verhalten eines Farbstoffs bei einer bestimmten Farbstoffkonzentration oder in Abhängigkeit der Farbstoffkonzentration.

Vorzugsweise arbeitet das erfindungsgemäße System also mit zwei Schritten, wobei in einem Schritt 1 bestimmt wird, wie das Bilddarstellungssystem auf eingehende Bildsteuerdaten antwortet, um daraus die Modulationsstärke zu beschreiben. Beispiele hierfür sind die Tintenmenge einer Tinte eines bestimmten Typs, die in Antwort auf die Bilddaten ausgespritzt wird oder die Stärke der durch Licht angeregten Farbschicht in einem Fotopapier bei gegebenen Bildsteuerdaten.

Während in einem Schritt 1 die Beziehung zwischen den Lichtmodulationswerten, die die Modulationsstärke beschreiben, und den eingegebenen Bilddaten auf Grund der spezifischen Eigenschaften (Erzeugungseigenschaften) des Bilddarstellungssystems beschrieben wird, wird in einem Schritt 2 die Beziehung zwischen den Lichtmodulationswerten und den Modulationsfarbwerten (des modellierten Bildes) hergestellt. In diesem Schritt 2 finden dann die spektralen Modulationseigenschaften der für das Bilddarstellungssystem gegebenen Lichtmodulatortypen Anwendung. Die spektralen Modulationseigenschaften werden bevorzugt durch Spektren (und nicht durch Farben) beschrieben, also z.B. wellenlängen- oder frequenzabhängig oder dazu entsprechend mit einer Vielzahl von Stützpunkten (vorzugsweise größer 10).

In Verbindung mit den durch die Lichtmodulationswerte beschriebenen Modulationsstärken mit den durch die Lichtmodulationseigenschaften beschriebenen spektralen Modulationseigenschaften können dann die Modulationsfarbwerte bestimmt werden. Die Modulationsfarbwerte beschreiben beispielsweise die Farbwerte, die ein Betrachter bei Betrachtung des modellierten Bildes auf Grund der Lichtmodulationseigenschaften der Lichtmodulatoren bei gegebener Modell-Beleuchtung wahrnimmt. Alternativ kann es sich z.B. auch um die von einem Farbdichtemessgerät gemessenen Werte handeln.

Die Lichtmodulationswerte und die durch diese beschriebenen Modulationsstärken beziehen sich vorzugsweise auf bestimmte Bildbereiche, beispielsweise Bildzellen, Pixel oder Bildpunkte. Dabei können die Bildbereiche auch mehrere durch Lichtmodulatoren gebildete Bildpunkte aufweisen, die hinsichtlich ihrer Lichtmodulationseigenschaften insbesondere auch durch ein Medium beeinflusst werden, das beispielsweise einen Hintergrund bildet.

Anders ausgedrückt, ergibt sich für jeden Typ von Lichtmodulator eine Spanne von Lichtmodulationswerten, mit der sich beispielsweise die Modulationsstärke beschreiben lässt. Das Modell-Bilddarstellungssystem legt dann in einem Schritt 1 die Position des Lichtmodulationswertes in dieser Spanne fest. Diese Spanne ist insbesondere eindimensional, wie dies bei Modulationsstärken gegeben ist, insbesondere betrifft sie keine spektralen Abhängigkeiten. Ein Übersprechen bedingt durch das Bilddarstellungssystem kann als Korrektur beschrieben werden. Dieses Übersprechen betrifft die Erzeugung von Lichtmodulatoren eines anderen Typs durch das Bilddarstellungssystem, obwohl die Bildsteuerdaten nur die Erzeugung eines bestimmten Typs von Lichtmodulator vorgeben. Beispielsweise kann bei der Belichtung eines Fotopapiers mit dem Licht einer bestimmten Farbe nicht nur der zur Farbe komplementäre Farbstoff angeregt werden, sondern können auch noch weitere Farbstoffe angeregt werden. Die vorliegende Erfindung nutzt somit insbesondere, dass zumindest in einfacher Näherung Lichtmodulationswerte von Lichtmodulationseigenschaften unabhängig sind. Dies erlaubt insbesondere die erfindungsgemäße Aufteilung der Verfahren in zwei Schritte.

Alle Lichtmodulatortypen in Verbindung mit den Lichtmodulationswerten, die sie einnehmen können, legen einen Farbraum der Lichtmodulatoren fest, bei dem auch noch der Lichtmodulationswert des Mediums berücksichtigt werden kann.

Bei der Modellierung der Antwort des Modell-Bilddarstellungssystems auf eingehende Bildsteuerdaten spannt die Menge aller erlaubten (realisierbaren) Bildsteuerdaten einen Lichtmodulationsfarbraum der Lichtmodulatoren auf. Dieser kann mit den Bildsteuerdaten oder auch dem Farbraum der Eingangsbilder in Beziehung gesetzt werden. Hierbei ist insbesondere die Modulationsstärke der Lichtmodulatoren, die durch das Bilddarstellungssystem in Antwort auf die Bildsteuerdaten festgelegt wird und insbesondere durch die Lichtmodulatoren dargestellt werden kann, von Bedeutung. Die Modulationsstärke wird beispielsweise durch die Menge der Farbstoffe im Fotopapier bestimmt.

Das erfindungsgemäße Modell beschreibt insbesondere ein System aus einer Bilddarstellungsvorrichtung und einem Medium, das ein Bild mittels Farbstoffen (Lichtmodulatoren) erzeugt. Dabei wird eine Beziehung zwischen Bilddaten und Lichtmodulationswerten vorzugsweise mittels den Erzeugungseigenschaften des Systems hergestellt. Eine Beziehung zwischen den Lichtmodulationswerten und den Reflexions-Farbwerten (allgemeiner: "Modulationsfarbwerten") wird durch die Lichtreflexionseigenschaften (allgemeiner: "Lichtmodulationseigenschaften") der Farbstoffe hergestellt. Die Erfindung betrifft jegliche Verwendung dieses Modells, insbesondere Verfahren, Vorrichtungen und Programme, die dieses Modell verwenden. Die Farbstoff-Steuerwerte (Lichtmodulator-Steuerwerte) beschreiben die Erzeugung von Farbstoffen (Lichtmodulatoren) mit bestimmten Lichtmodulationswerten durch eine Bilddarstellungsvorrichtung in oder auf einem Medium auf Grund der Bildsteuerdaten. Die Reflexions-Farbwerte (Modulationsfarbwerte) beschreiben das visuelle (oder das von einem Farbmessgerät gemessene) Erscheinungsbild des durch das Medium dargestellten Fotobildes in einem vorgegebenen Farbenraum. Zur Kalibrierung des Modells werden bevorzugt Modulationsfarbwerte berechnet, die von dem für die Kalibrierung verwendeten Farbmessgerät gemessen werden. Zusätzlich oder alternativ können die erzeugten Farben zur Kalibrierung auch spektral vermessen und die Spektren mit den den Modulationsfarbwerten zugeordneten Empfindlichkeitskurven gefaltet werden.

Bei den Bildsteuerdaten, die zur Ansteuerung von den Bilddarstellungsvorrichtungen verwendet werden, kann es sich z.B. um RGB-Bilddaten handeln, die ein fotografisches Bild darstellen. Diese Bildsteuerdaten wurden beispielsweise durch digitale Abtastung eines fotografischen Filmes gewonnen oder stammen von einer digitalen Fotokamera oder werden über ein Netzwerk übertragen oder sind auf einem Speichermedium gespeichert. Die Bildsteuerdaten beschreiben das Bild üblicherweise in einem Farbenraum, der für selbstleuchtende Bilddarstellungsvorrichtungen, wie z.B. Monitore, geeignet ist. Insbesondere werden die Bildsteuerdaten durch sRGB beschrieben. Diese Bildsteuerdaten müssen dann innerhalb der Bilddarstellungsvorrichtung, die beispielsweise Lichtreflektierende Farbstoffe verwendet, geeignet konvertiert werden, um die Erzeugung der Farben bzw. die Lichtmodulation zu steuern.

Die Erzeugung von Bildsteuerdaten mittels der Abtastung von Filmen ist beispielsweise in der europäischen Patentanmeldung Nr. 00 104 491.6 mit dem Titel "Optimierungsapparat für fotografische Bilddaten" beschrieben. Dort wird die Aufbereitung der Bildsteuerdaten (dort "Bilddaten" genannt) beschrieben, um filmtypspezifische oder kameratypspezifische Eigenschaften der Bilddaten zu beseitigen. Basierend auf diesen "optimierten Bilddaten" erfolgt dann eine Ansteuerung einer Bilddarstellungsvorrichtung.

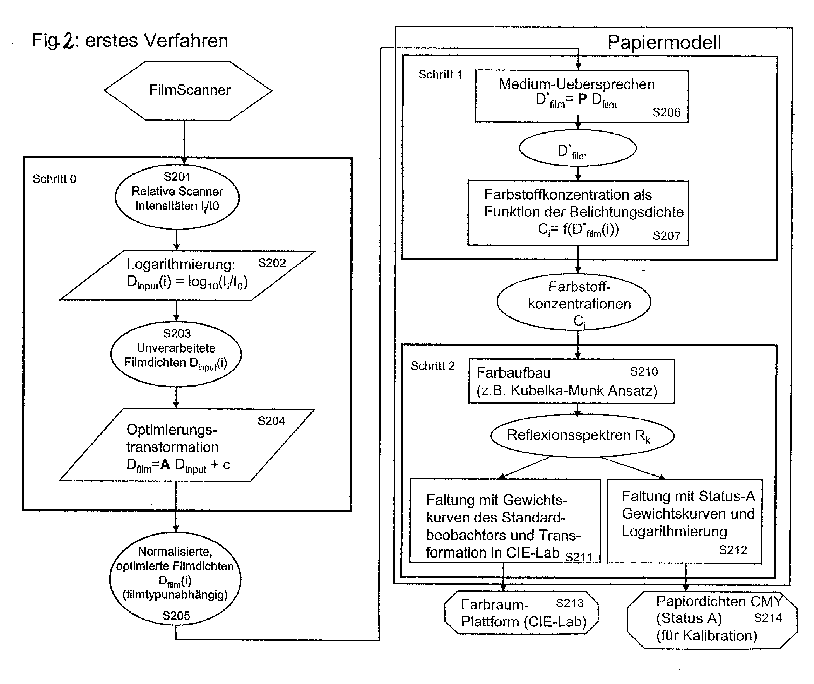

Erfindungsgemäß wird nun nach einem ersten Verfahren (vgl. Schritte 1 und 2 in Fig. 2 und "Papiermodell" in Fig. 5) modelliert, wie ein durch ein Bilddarstellungssystem (Farbstoff-System), basierend auf eingegebenen Bildsteuerdaten (z.B. "optimierten Bilddaten"), erzeugtes Bild aussehen würde. Wie das Bild (für einen Betrachter oder ein Messgerät) aussehen würde, wird durch Modulationsfarbwerte beschrieben. Es wird beispielhaft von einer Modell-Bilddarstellungsvorrichtung und einem Modell-Medium ausgegangen.

In einem ersten Schritt werden Lichtmodulationswerte berechnet, die die Lichtmodulation durch die Lichtmodulatoren (Farbstoffe) in oder auf dem Modell-Medium beschreiben. Die Bilddarstellungsvorrichtung wandelt die eingehenden Bildsteuerdaten in Lichtmodulator-Steuerwerte um. Dabei wird insbesondere eine Dynamikanpassung an den darstellbaren Luminanzumfang vorgenommen. Die Lichtmodulationswerte der Lichtmodulatoren werden durch die Lichtmodulator-Steuerwerte bestimmt, die im Folgenden beispielhaft als Farbstoff-Steuerwerte bezeichnet werden. Handelt es sich bei dem Medium z.B. um Papier und um einen Tintenstrahldrucker, so steuern Farbstoff-Steuerwerte das Ausspritzen der Farbstoffe aus den Düsen des Druckkopfes auf das Medium. Handelt es sich bei dem Medium um z.B. lichtempfindliches Fotopapier, so werden durch die Belichtung des Mediums Farbstoffe in dem Medium (z.B. in transparenten, oberflächennahen Schichten) erzeugt. Die Farbstoff-Steuerwerte steuern in diesem Fall Farbe und Intensität des Belichtungslichtes und damit Farbe (komplementär zum Belichtungslicht) und Menge und/oder Konzentration und/oder Schichtdicke der erzeugten Farbstoffe und somit die Lichtmodulationswerte der Farbstoffe. Die Lichtmodulator-Steuerwerte werden von dem Bilddarstellungssystem aus den eingehenden Bildsteuerdaten bestimmt, um eine möglichst realistische Darstellung der in den Bildsteuerdaten enthaltenen Bildinformation durch die Lichtmodulatoren zu erzielen. In einem direkten Modell kann ein direkter Zusammenhang zwischen den Bildsteuerdaten und den Lichtmodulationswerten ohne Umweg über Lichtmodulator-Steuerwerte angenommen werden. Sind nun in einem ersten Schritt (oder den Bildsteuerdaten) entsprechende Lichtmodulationswerte berechnet, so kann in einem zweiten Schritt berechnet werden, wie für einen Betrachter oder ein Messgerät das Bild erscheint. Hierzu werden Modulationsfarbwerte (beispielsweise "Reflexions-Farbwerte") bestimmt, die die Farbwerte des von dem Medium modulierten (beispielsweise "reflektierten") Lichtes beschreiben. Die Modulationsfarbwerte werden im Folgenden beispielhaft als Reflexions-Farbwerte bezeichnet.

Die Zusammenhänge zwischen (Bildsteuerdaten) und Lichtmodulationswerten und Reflexions-Farbwerten werden vorzugsweise durch optische Messungen bestimmt.

Die Farbstoff-Steuerwerte hängen von den Bildsteuerdaten ab. Die Erzeugung der Farbstoffe auf Grund der Farbstoff-Steuerwerte, das heißt z.B. ihre Konzentration, Menge und/oder räumliche Verteilung hängt von den Farbstofferzeugungseigenschaften ab, die das Farbstoff-System hat. Die Farbstofferzeugungseigenschaften beschreiben die Antwort dieses Systems auf die Farbstoff-Steuerdaten bei der Erzeugung der Farbstoffe. Auch dies lässt sich wieder auf Grund bekannter Eigenschaften der Bilddarstellungsvorrichtung oder des Mediums modellieren und/oder empirisch bestimmen. Beispielsweise lässt sich empirisch bestimmen, welche eingegebenen Bildsteuerdaten zu welchen Konzentrationen und/oder Mengen von bestimmten Farbstoffen führen. Hierbei sind insbesondere die verschiedenen Arten von Farbstoffen, die zur Darstellung der Farben zur Verfügung stehen, zu berücksichtigen. Die Bestimmung der Konzentration und/oder der Menge kann z.B. durch optisches Messen der Farbsättigung reiner (nicht gemischter) Farbstoffe erfolgen, die beispielsweise in verschiedenen Konzentrationen auf einem Medium in'der Form eines Testfeldes von der Bilddarstellungsvorrichtung aufgebracht sind. Durch eine eindeutige Zuordnung zwischen Bildsteuerdaten und Testfeld ergibt sich beispielsweise ein Zusammenhang zwischen Farbsättigung und Bildsteuerdaten. Direkt oder aufgrund der bekannten spektralen Eigenschaften des Farbstoffes kann dann auf den Zusammenhang zwischen Bildsteuerdaten und Farbstoffkonzentration (Lichtmodulationswert) geschlossen werden.

Die erzeugten Farbstoffe (wie auch ein Medium) haben Lichtmodulationseigenschaften, wie z.B. (spektrale) Lichtreflexionseigenschaften, Lichtabsorptionseigenschaften und/oder Lichttransmissionseigenschaften, die im Folgenden beispielhaft als "Lichtreflexionseigenschaften" bezeichnet werden. Diese hängen von der Farbstofffarbe bzw. der chemischen und physikalischen Zusammensetzung der Farbstoffe, der Konzentration der Farbstoffe, der räumlichen Verteilung der Farbstoffe (Anordnung in einer höheren oder tieferen Schicht) und/oder Farbstoffmenge usw. ab. Die Lichtreflexionseigenschaften und/oder Lichtabsorptionseigenschaften der erzeugten Farbstoffe können aber auch modelliert werden. Beispielsweise können die Reflexionsspektren der einzelnen Farbstoffe in Abhängigkeit von ihrer Konzentration bzw. Dichte in oder auf dem Medium vermessen oder modelliert werden und die so erhaltenen Daten dann als Lichtreflexionseigenschaften in dem Modell verwendet werden.

Bei dem Systemplattform-Farbraum handelt es sich vorzugsweise um einen Standardfarbraum. Insbesondere wird ein Farbraum bevorzugt, der an die Farberkennung des menschlichen Auges angepasst ist. Bevorzugt wird auch ein Farbraum, der die Reflexionseigenschaften des Mediums, soweit diese nicht durch Farbstoffe verändert sind, beschreibt. Besonders bevorzugt wird der CIE-Lab-Farbraum.

Die Reflexions-Farbwerte werden auch aus gegebenen Emissionseigenschaften einer Lichtquelle berechnet, die das Modell-Medium beleuchtet. Die Emissionseigenschaften beschreiben insbesondere das Spektrum der Lichtquelle und/oder die Beleuchtungsgeometrie (z.B. den Emissionswinkel und/oder die Beleuchtungsrichtung relativ zu dem Medium) und/oder die Beleuchtungsstärke (Helligkeit der Lichtquelle). Die Emissionseigenschaften beschreiben insbesondere die Eigenschaften der Beleuchtungslichtquelle, die über die Reflexion am Medium oder Farbstoffen den Farbeindruck eines Betrachters beeinflussen.

Die erfindungsgemäße Plattform ist durch die Farbwerte, die in einem bestimmten Farbraum vorliegen, die Beleuchtung (Spektrum der Beleuchtung, Intensität) und die Beleuchtungsgeometrie (Öffnungswinkel) bestimmt. Bei der erfindungsgemäßen Plattform hat man somit weniger Daten, als wenn man z.B. Spektren als Plattform verwenden würde. Außerdem ist die Plattform bereits den Eigenschaften eines Modellbilddarstellungssystems angepasst, das nahe an der Realität liegt. Das erfindungsgemäße Modell ist dabei vorzugsweise so gestaltet, dass in der Plattform alle Informationen darstellbar sind, die von realen Bilddarstellungssystemen verarbeitet werden können. Dies gilt insbesondere dann, wenn bei dem erfindungsgemäßen Modell ideale Eigenschaften der Lichtmodulatoren und gegebenenfalls des Mediums angenommen werden. Ein wesentlicher Vorteil der hierin beschriebenen Erfindung liegt in dieser Idealisierung. Auf diese Art und Weise gehen keine Informationen verloren, die später von einem irgendwie gearteten Bilddarstellungssystem dargestellt werden könnten. Dennoch findet eine Annäherung an die Darstellungseigenschaften der realen Bilddarstellungssysteme statt. In einem zweiten Verfahren, das im Folgenden noch beschrieben wird, kann dann gezielt durch "Verschlechterung" der Farbwerte eine Anpassung an ein ideales Bilddarstellungssystem vorgenommen werden. Obiges stellt einen wesentlichen Unterschied zum Stand der Technik dar, bei dem von Anfang an eine möglichst exakte Anpassung an ein reales System versucht wird, z.B. durch Blackbox-Mapping. Bei dieser Vorgehensweise des Standes der Technik ist eine Anpassung des Systems an andere reale Bilddarstellungssysteme, z.B. bei einem Wechsel des Bilddarstellungssystems sehr schwierig, da bei der zuerst vorgenommenen Blackboxtransformation, die auf das erste reale System angepasst war, bereits Information verloren ging, die durch das zweite reale Bilddarstellungssystem hätte genutzt werden können. Durch das erfindungsgemäße Plattformprinzip, das im Rahmen eines ersten Verfahrens ein idealisiertes Modell für ein Bilddarstellungssystem verwendet, wird dieser Nachteil beseitigt und eine flexible Anpassung an reale Bilddarstellungssysteme auf Grund der erfindungsgemäßen Plattform ermöglicht.

Experimentell werden zuerst Zusammenhänge zwischen Bildsteuerdaten (z.B. RGB-Werte) und Lichtmodulationswerten (z.B. Farbstoffkonzentrationen) hergestellt. Dazu werden beispielsweise Bildsteuerdaten eingegeben, die nur (oder hauptsächlich) zur Erzeugung oder Anregung von Lichtmodulatoren eines bestimmten Typs beitragen. Beispielsweise wird durch RGB (0; 1; 1) nur der Farbstoff Cyan von einem Drucker erzeugt. Diese Farbstoffkonzentration wird dann durch Veränderung der Bildsteuerdaten variiert, beispielsweise von keinem Farbstoff bis voller Farbstoffkonzentration. Dies wird für alle gegebenen Lichtmodulatortypen durchgeführt, um so einen Zusammenhang zwischen Bildsteuerdaten und Lichtmodulationswerten zu erzeugen. Die Lichtmodulationseigenschaften der Lichtmodulatoren, also beispielsweise die Spektren der Farbstoffe können beispielsweise von einem Spektrometer vermessen werden. Dies kann auch für jeden Lichtmodulatortyp abhängig vom Lichtmodulationswert erfolgen, also beispielsweise abhängig von der Farbstoffkonzentration. Dadurch sind die Lichtmodulationseigenschaften der Lichtmodulatoren bekannt. Diese können dann im Modell, beispielsweise nach einer Idealisierung, die z.B. die Spektren beschneidet, um das Übersprechen zu beschränken, eingesetzt werden. Die Testausdrucke können auch durch Farbdichtemessinstrumente vermessen werden, die z.B. ANSI-A-Werte liefern, also eine bestimmte Empfindlichkeit für gewisse Farben aufweisen. Als Testausdrucke können bevorzugt auch graue Testfelder verwendet werden, die alle Lichtmodulatortypen verwenden, um die Farbe grau in verschiedenen Helligkeitsstufen zu erzeugen. Die grauen Testfelder werden dann beispielsweise mit dem Messinstrument vermessen, um einen Zusammenhang zwischen ANSI-A-Werten und den Lichtmodulationswerten zu bestimmen. Eine wesentliche Besonderheit des Modells ist die, dass die physikalische Eigenschaft des Bilddarstellungssystems, nämlich die Verwendung unterschiedlicher Typen von Lichtmodulatoren mit unterschiedlichen Lichtmodulationseigenschaften als Wissen in das Modell hineingesteckt wird, um dadurch das mathematische Konzept leichter an die verschiedenen realen Gegebenheiten (z.B. bei Änderung eines Lichtmodulatortyps) anpassbar zu gestalten. Wesentlich an dem Modell ist, dass von Lichtmodulationswerten ausgegangen wird, die reale physikalische Eigenschaften des Bilddarstellungssystems verkörpern. Die im Stand der Technik verwendeten Werte, wie z.B. RGB-Werte, stellen künstliche Farbsysteme dar, die nicht im Zusammenhang mit dem Bilddarstellungssystem stehen. Durch die Umwandlung dieser "künstlichen" Werte in Lichtmodulationswerte wird eine bessere Grundlage für eine Modellierung geschaffen, die dann im Endeffekt ein flexibel anpassbares Modell mit herausragenden Eigenschaften liefert.

Kennt man die Lichtmodulationseigenschaften (z.B. Spektren) der Lichtmodulatoren, so kann man aus den Messwerten z.B. des Farbdichtemessinstruments und den bekannten Empfindlichkeitskurven dieses Messinstruments die Lichtmodulationswerte bestimmen. Entsprechend kann man die Lichtmodulationswerte aus gemessenen Spektren von Testfeldern bestimmen. Beispielsweise kann man aus den Lichtmodulationswerten und den für die Lichtmodulatoren bekannten Spektren sich die LAB-Werte errechnen, die beispielsweise das menschliche Auge bei einer bestimmten Beleuchtung wahrnehmen. Auch bei der Bestimmung der Lichtmodulationswerte aus den Messungen mit dem Farbdichtemessinstrument werden vorzugsweise die Beleuchtungsgeometrie und die Eigenschaften der Beleuchtungsquelle mit berücksichtigt.

Verwendet man die oben erwähnten Graufelder, so besteht beispielsweise ein direkter Zusammenhang zwischen den Werten der Lichtmodulatoren und dem Vektor L bei der Lab-Darstellung. Durch Kalibrieren der Grauskala lässt sich somit das Modell kalibrieren.

Die Wechselwirkungen der Lichtmodulatoren bei der Darstellung eines Bildes kann durch geeignete Funktionen und Transformationen berücksichtigt werden. Vorzugsweise werden bei dem hier beschriebenen Modell die die Bilderscheinung beeinflussenden Eigenschaften der einzelnen Lichtmodulatoren als voneinander unabhängig angesehen. Dies gilt vorzugsweise in nullter Näherung. In erster Näherung können dann beispielsweise über Störungsrechnung sich einander beeinflussende Eigenschaften der Lichtmodulatoren berücksichtigt werden. Beispielsweise können so z.B. über Matrizen das Übersprechen der Spektren der einzelnen Farbstoffe (Lichtmodulatoren) berücksichtigt werden oder auch, wenn verschiedene Farbschichten sich überlappen.

Der Vorteil an dem Modell voneinander unabhängiger Lichtmodulatoren liegt in der Möglichkeit der Linearkombination von z.B. Spektren.

Der Zusammenhang zwischen Lichtmodulationswerten und den Farbwerten, z.B. Lab-Werten; wird beispielsweise wie folgt hergestellt. Den einzelnen Lichtmodulatoren (z.B. Farbstoffen) werden Lichtmodulationseigenschaften (z.B. Spektren) zugeordnet, die zuvor beispielsweise durch Messung bestimmt wurden oder z.B. für bestimmte Farbstoffe bekannt sind. Die Lichtmodulationswerte stellen eine Art Wichtungsfaktor der Lichtmodulationseigenschaften dar. Über eine Transformation werden für jeden Lichtmodulator die Lichtmodulationseigenschaften in transformierte Lichtmodulationseigenschaften umgewandelt. Die Lichtmodulationseigenschaften liegen nun in einem transformierten Raum vor, der die Eigenschaft hat, dass er sich für eine Kombination der Lichtmodulationseigenschaften verschiedener Lichtmodulatortypen eignet. Die Transformation ist beispielsweise eine Saunderson-Transformation mit darauf folgender Anwendung des Logarithmus. Die Kombination der transformierten Lichtmodulationseigenschaften (z.B. transformierte Spektren) erfolgt dann vorzugsweise linear und eventuell mit Anwendung von Korrekturen (z.B. mittels Störungsrechnung). Danach erfolgt wieder eine Rücktransformation in den eigentlichen Raum der Lichtmodulationseigenschaften (eigentlicher Raum der Spektren). Die nun gefundene Lichtmodulationseigenschaft (das nun gefundene Spektrum) stellt eine Kombination der Lichtmodulationseigenschaften aller Lichtmodulatoren dar. Aus dieser kombinierten Lichtmodulationseigenschaft lassen sich dann die Modulationsfarbwerte bestimmen. Dabei werden vorzugsweise die Art der Lichtquelle und die Beleuchtungsgeometrie mit berücksichtigt. Da die oben genannten Transformationen umkehrbar sind, ist auch ein Vorgehen in der umgekehrten Richtung möglich. Dies wird im Folgenden im Zusammenhang mit dem zweiten Verfahren beschrieben. Vorzugsweise werden aber bei dem ersten Verfahren andere Lichtmodulationseigenschaften (idealisierte Lichtmodulationseigenschaften) zu Grunde gelegt, um in eine geeignete Plattform zu gelangen. In dem zweiten Verfahren werden dann realere Modelle zu Grunde gelegt, um eine gute Anpassung an das aktuell verwendete Bilddarstellungssystem zu erzielen.

Die Eigenschaften des Mediums (z.B. Farbton des Papiers) können als gesonderter Lichtmodulatortyp oder bei der Kombination der transformierten Lichtmodulationseigenschaften z.B. berücksichtigt werden. Dies kann auch in Form einer Korrektur erfolgen.

Ein wesentlicher Vorteil der Erfindung liegt darin, dass beispielsweise bei Verwendung von Lichtmodulatoren mit prinzipiell bekannten Lichtmodulationseigenschaften (z.B. Verwendung bekannter Farbstoffe) durch die Vermessung weniger Felder, z.B. Graufelder, eine Anpassung des Systems an ein reales Bilddarstellungssystem mit gutem Ergebnis vorgenommen werden kann. Genutzt wird hierbei, im Gegensatz zum Blackbox-Modell, insbesondere dass zumindest näherungsweise die Modulationsstärken der Lichtmodulatoren, die von den Bildsteuerdaten abhängen und durch die Lichtmodulationswerte beschrieben werden, von den spektralen Modulationseigenschaften, die vom Lichtmodulatortyp abhängen und durch Lichtmodulationseigenschaften beschrieben werden, unabhängig sind.

Im Folgenden wird ein zweites Verfahren (vgl. "invertiertes Papiermodell" in Fig. 6) gemäß der Erfindung beschrieben, das dasselbe Modell verwendet, jedoch invers zu dem ersten Verfahren durchgeführt wird. Anders ausgedrückt, die Eingangsdaten des ersten Verfahrens sind die Ausgangsdaten des zweiten Verfahrens und die Ausgangsdaten des ersten Verfahrens sind die Eingangsdaten des zweiten Verfahrens.

Das zweite Verfahren betrifft die Modellierung von Bilddaten, die zur Erzeugung eines vorgegebenen, fotografischen Bildes (Fotobildes) führen, wenn man eine Modell-Bilddarstellungsvorrichtung basierend auf Bildsteuerdaten ansteuert, um in bzw. auf einem Modell-Medium das Bild zu erzeugen. Die Bildsteuerdaten des ersten Verfahrens können sich z.B. hinsichtlich Darstellung und verwendeten Farbraum von den Bildsteuerdaten des zweiten Verfahrens unterscheiden.

In einem ersten Schritt werden Lichtmodulationswerte berechnet, die bei einem gegebenen System (einer gegebenen Modell-Bilddarstellungsvorrichtung) und einer gegebenen Beleuchtung des Mediums bzw. gegebener Lichtreflexion (Lichtmodulationeigenschaft) der Farbstoffe (Lichtmodulatoren) den beobachteten Reflexions-Farbwerten (Modulationsfarbwerten) zu Grunde liegen müssen. Dabei geht insbesondere die (spektrale) Emissionseigenschaft der das Medium bzw. das Bild beleuchtenden Lichtquelle ein. Aus den Reflexions-Farbwerten, der Beleuchtung und den (bekannten oder gemessenen) spektralen Lichtmodulationseigenschaften (Lichtreflexionseigenschaften) der Farbstoffe lassen sich beispielsweise die Lichtmodulationswerte (beispielsweise gegeben durch die Konzentration der Farbstoffe oder Polarisationsgrad eines Flüssigkristalls oder eine Funktion davon) für gegebene Farbstoffarten oder -typen berechnen. Diese Berechnung basiert auf den spektralen Lichtreflexionseigenschaften der Farbstoffe und insbesondere der Art der zur Verfügung stehenden Farbstoffe bzw. auf den durch die Farbstoffe darstellbaren Farben (z. B. Cyan, Magenta und Gelb). Beispielsweise wird basierend auf den Lichtreflexionseigenschaften bei einer gegebenen Gruppe von Farbstoffen jedem Farbstoff eine gewisse Modulationsintensität oder Modulationsstärke (Konzentration) zugeordnet, die im Modell (vereinfachend) durch einen Lichtmodulationswert dargestellt wird. Die Modulationsstärke bzw. -intensität der Farbstoffe hängt insbesondere von der Konzentration oder Dichte der Farbstoffe ab. Je höher die Konzentration ist, umso gesättigter ist üblicherweise die Farbe, die durch das vom Farbstoff reflektierte Licht dargestellt wird, und umso stärker wird das Licht moduliert. Die Modulationseigenschaften (Modulationsstärke und spektrale Eigenschaften) hängen auch von der räumlichen Verteilung der Farbstoffe ab, also ob beispielsweise weitere Farbstoffe oberhalb oder unterhalb eines Farbstoffes angeordnet sind. In diesem Fall spielen z.B. auch die Absorptions- und Transmissionseigenschaften der anderen Farbstoffe eine Rolle. Schließlich kann auch die Schichtdicke, die Reihenfolge, der Farbstoffe und die Menge der Farbstoffe bei den Lichtreflexionseigenschaften berücksichtigt werden, die z. B. auch von der Überlappung verschiedener Farbstoffe beeinflusst werden können. Wie bereits oben erwähnt, können die Lichtreflexionseigenschaften verschiedener Farbstoffe z.B. konzentrationsabhängig durch optische Messung bestimmt werden. Die so gewonnenen Werte fließen dann als Lichtreflexionseigenschaften bei den erfindungsgemäßen Verfahren ein.

Auch werden vorzugsweise die Zusammenhänge zwischen den Farbstoffen und Lichtmodulationswerten modelliert oder die Zusammenhänge werden empirisch bestimmt bzw. gemessen. Beispielsweise werden von einem zu modellierenden System oder einer Vielzahl verschiedener Systeme Testbilder erzeugt, die zumindest einen Großteil des erzeugbaren Farbraums abdecken. Die Modell-Berechnung kann beispielsweise auf den für das System aus Bilddarstellungsvorrichtung und Medium gegebenen Farbstofferzeugungseigenschaften basieren, die die Erzeugung der Farbstoffe in Antwort auf die Bildsteuerdaten beschreiben.

Sind die Lichtmodulationswerte aus den Reflexions-Farbwerten bestimmt, so werden in einem nächsten Schritt den Lichtmodulationswerten entsprechende Bildsteuerdaten berechnet, die bei Eingabe in die Modell-Bilddarstellungsvorrichtung zur Erzeugung des Bildes führen würden.

Bei der Umsetzung der Bildsteuerdaten in Lichtmodulationswerte und somit auch bei der Umsetzung der Lichtmodulationswerte in entsprechende Bildsteuerdaten muss berücksichtigt werden, dass das Bilddarstellungssystem (im folgenden beispielhaft "Farbstoff-System") andere Farbeigenschaften bzw. Modulationseigenschaften hat, als das System, von dem die Bildsteuerdaten stammen. Insbesondere ist typischerweise der Farbenraum der fotografischen Bilddaten (die z.B. von einem Film stammen) größer (größerer Dynamikbereich, größerer Gamut) als der Farbenraum oder Gamut, der durch Lichtmodulatoren (im folgenden beispielhaft "Farbstoffe auf einem Medium") darstellbar ist. Anders ausgedrückt, die Modulationsstärke der Lichtmodulatoren ist nicht ausreichend, um die volle Dynamik darzustellen. Bei der Umsetzung der fotografischen Bildsteuerdaten in Lichtmodulationswerte müssen also die Erzeugungseigenschaften des Farbstoff-Systems berücksichtigt werden. Diese Erzeugungseigenschaften stellen also eine Beziehung zwischen den durch die Farbstoffe und das Medium erzeugbaren Farbenraum und dem durch Bildsteuerdaten beschreibbaren Farbenraum dar.

Die Erzeugungseigenschaften des Farbstoff-Systems beschreiben also z.B. die Anpassung des Dynamikumfangs der Bilddaten an den mit dem Medium darstellbaren Dynamikumfang. Typischerweise ist der Dynamikumfang der fotografischen Bilddaten, die z.B. mittels einer Kamera gewonnen werden, um Größenordnungen höher als der durch ein mit Farbstoffen versehenes, beleuchtetes Medium darstellbare Dynamikumfang.

Vorzugsweise beschreiben die Erzeugungseigenschaften auch ein Übersprechen der Farben bzw. Spektren der verschiedenen Farbstoffe.

Bei der Belichtung des fotografischen Papiers kommen zwei Arten von Übersprechen zum Zuge. Bei der Belichtung wird eine spezifische Farbschicht (z.B. der Gelb-Farbstoff) nicht nur von Licht komplementärer Farbe (z.B. blauer Farbe) angeregt. Diese erste Art des Übersprechens ist aber im Falle des fotografischen Papiers normalerweise vernachlässigbar und wird deshalb vorzugsweise (im Schritt 1) nicht modelliert. Die zweite Art des Übersprechens kommt beim Messen des entwickelten Bildes zum Tragen. Jeder Farbstoff absorbiert nicht nur Licht im Wellenlängenbereich "seiner" Farbe, sondern auch im Wellenlängenbereich anderer Farben. Dieses Übersprechen ist nicht vernachlässigbar und wird vorzugsweise bei Berechnung der Modulationswerte (im Schritt 2) berücksichtigt, indem die spektralen Modulationseigenschaften der Lichtmodulatoren berücksichtigt werden.

Der Farbtonumfang oder Gamut, der mit dem Farbstoff-System darstellbar ist, ist typischerweise kleiner als der durch die eingegebenen Bildsteuerdaten darstellbare Farbtonumfang bzw. Gamut oder nicht deckungsgleich damit. Es muss somit eine Abbildung bzw. Transformation der nicht darstellbaren Farben auf darstellbare Farben erfolgen. Diese Anpassung kann ebenfalls durch die Erzeugungseigenschaften (im Rahmen des Schrittes 1) beschrieben werden.

Vorteilhaft wird für das erste oben genannte Verfahren, das Reflexions-Farbwerte erzeugt, ein ideales Farbstoff-System (Modell-Bilddarstellungssystem) vorausgesetzt. Dieses ideale Farbstoff-System hat beispielsweise einen größeren Dynamikumfang als er mit realen Systemen darstellbar ist, einen größeren Farbtonumfang (Gamut) als er mit realen Systemen darstellbar ist und zeigt beispielsweise kein Übersprechen oder nur geringes Übersprechen der ersten Art. Das ideale Farbstoff-System wird also vorzugsweise so gestaltet, dass es die Erzeugungseigenschaften aller realer Medien (aller für eine Anwendung in Betracht gezogenen Medien) oder Bilddarstellungsvorrichtungen umfasst, die Farbstoffe verwenden. Anders ausgedrückt, unabhängig von der Art der Bilddaten stellen die idealen Modulations-Farbwerte (Reflexions-Farbwerte) des idealen Modells die Bilddaten besser dar als irgendein reales Farbstoff-System. Das ideale Farbstoff-System hat also ideale Erzeugungseigenschaften, orientiert sich aber vorzugsweise dennoch an den grundsätzlichen Beschränkungen einer passiven, nicht-selbstleuchtenden Fotobilddarstellung durch Medium und Farbstoff.

Andererseits, und im Gegensatz zu der allgemeinen, vorrichtungsunabhängigen Plattform des ICC-Standards, ist vorzugsweise das Modell-Bild, das nach dem ersten Verfahren erzeugt wird und durch die Reflexions-Farbwerte dargestellt wird, typisch für die Darstellung eines Bildes mit Farbstoffen in oder auf einem Medium. Die Erzeugungseigenschaften werden also so gewählt, dass alle realen Farbstoff-Systeme dargestellt werden können, ohne wesentlich über die Eigenschaften der realen Farbstoff-Systeme hinaus zu gehen. Die Reflexions-Farbwerte, die nach dem ersten Verfahren der Erfindung erzeugt wurden, eignen sich somit optimal als Ausgangspunkt zur Berechnung von Bilddaten, die zur Ansteuerung eines realen Farbstoff-Systems aus Medium und Bilddarstellungsvorrichtung verwendet werden. Denn sie berücksichtigen schon die wesentlichen Unterschiede zwischen einem mit Farbstoffen arbeitenden Farbstoff-System und aktiven Systemen, die selbstleuchtend die Farben darstellen, wie z.B. Monitore. Insbesondere ist der maximal mögliche Dynamikumfang der Reflexions-Farbwerte erheblich geringer als der durch die eingehenden Bilddaten darstellbare Dynamikumfang (z.B. um eine Größenordnung oder mehr kleiner). Entsprechend ist beispielsweise auch der darstellbare Farbtonumfang erheblich kleiner als der durch die Bilddaten darstellbare Farbtonumfang.

Werden die Reflexions-Farbwerte z.B. wieder in Bilddaten zur Ansteuerung eines Monitors umgewandelt, so lässt sich auf dem Monitor betrachten, welches Ergebnis mit einem System aus Bilddarstellungsvorrichtung und Medium maximal oder ideal für gegebene Bilddaten erzielbar ist.

Bildsteuerdaten zur Ansteuerung eines Farbstoff-Systems aus Bilddarstellungsvorrichtung und Medium können durch Hintereinanderschalten des ersten und zweiten Verfahrens erzielt werden, dabei unterscheiden sich vorzugsweise die jeweils zu Grunde gelegten Modelle für das Bilddarstellungssystem. Die in dem gewünschten Farbraum nach Durchführung des ersten Verfahrens vorliegenden Reflexions-Farbwerte stellen die Schnittstelle (Plattform) zwischen dem ersten und zweiten Verfahren dar. Während dabei vorzugsweise bei dem ersten Verfahren ein idealisiertes Modell eines Farbstoff-Systems aus Medium und Bilddarstellungsvorrichtung zu Grunde gelegt wird, wird vorzugsweise bei der Durchführung des zweiten Verfahrens ein reales Modell eines Farbstoff-Systems aus realem Medium und realer Bilddarstellungsvorrichtung verwendet, das durch die mittels des zweiten Verfahrens berechneten Bilddaten real angesteuert wird. Dadurch können über den Umweg der idealen Reflexions-Farbwerte optimal angepasste Bilddaten zur Ansteuerung eines realen Systems erzeugt werden.

Die Erfindung betrifft weiter ein Programm, das die erfindungsgemäßen Verfahren mit Hilfe eines Computers durchführt, sowie ein Speichermedium mit dem Computerprogramm.

Die Erfindung betrifft einen Drucker, der eine Steuereinheit aufweist, die eingegebene Bilddaten nach dem zweiten Verfahren, das die Eigenschaften des vom Drucker verwendeten Mediums widerspiegelt, verarbeitet.

Die Erfindung betrifft weiter einen Drucker, der eine Steuereinrichtung aufweist, die eingegebene Bildsteuerdaten zuerst nach dem ersten Verfahren mit einem idealen Modell und dann nach dem zweiten Verfahren mit einem realen Modell, das die Eigenschaften des Druckers und des vom Drucker verwendeten Mediums widerspiegelt, verarbeitet.

Die Erfindung betrifft auch einen Filmscanner, der die gescannten Farbdaten nur nach dem ersten Verfahren oder zuerst nach dem ersten Verfahren und dann nach dem zweiten Verfahren verarbeitet.

Die Erfindung betrifft auch ein Fotolabor, insbesondere digitales Minilab oder einen Printer oder Scanner für ein Großlabor, bei dem eines der beiden Verfahren oder beide Verfahren zur Anwendung kommen.

Die Erfindung betrifft weiter ein Fotolabor, insbesondere ein sog. Minilab oder ein Großlabor. Derartige Fotolabors oder fotografische Minilabs verarbeiten fotografische Bildinformation, um sie dann nach der Bildverarbeitung in verschiedener Form abzugeben. Beispielsweise wird die verarbeitete Bildinformation auf einem Medium ausgegeben, auf einem Datenträger gespeichert oder über ein Netzwerk abgegeben. Die Bildinformation kann digital eingegeben werden, beispielsweise mittels Datenträger, die von Digitalkameras verwendet werden, oder klassisch über Filme, die dann optisch abgetastet werden, um die eingegebene Bildinformation vor einer Weiterverarbeitung zu digitalisieren.

Die Erfindung betrifft derartige Fotolabors oder Minilabs, die eine Steuereinrichtung oder einen Computer aufweisen, die bzw. der zumindest eines der erfindungsgemäßen Verfahren durchführt oder das erfindungsgemäße Modell verwendet. Sie betrifft auch ein Fotolabor, insbesondere ein Minilab, das zumindest einen Drucker der oben beschriebenen Art aufweist. Die erfindungsgemäßen Verfahren sind auch anwendbar, um für beliebige reale Systeme aus einer Bilddarstellungsvorrichtung und einem Medium optimierte Bilddaten zur Ansteuerung des realen Systems zu erzeugen, die die Eigenschaften des realen Systems berücksichtigen. Hierzu werden von einer realen Bilddarstellungsvorrichtung auf einem realen Medium erzeugte Testbilder empfangen, die vorzugsweise den Dynamikbereich, den Farbtonumfang und/oder die Übersprecheigenschaften beschreiben bzw. abdecken. Weiter werden digitale Bilddaten empfangen, die ein mit dem realen System zu erzeugendes Bild darstellen. Diese digitalen Bilddaten werden dann durch eine Abfolge des ersten Verfahrens und zweiten Verfahrens für das reale System optimiert. Dazu werden bevorzugt Modulationsfarbwerte (im folgenden beispielhaft "Reflexions-Farbwerte") nach dem ersten Verfahren erzeugt, wobei hierzu bevorzugt ein ideales System zu Grunde gelegt wird. Aus den erzeugten "idealen" Reflexions-Farbwerten werden dann die für die Ansteuerung des realen Systems optimierten Bilddaten erzeugt. Dabei werden die Testbilder optisch vermessen, um die für die Durchführung des Verfahrens erforderlichen Erzeugungseigenschaften und die Zusammenhänge zwischen Lichtmodulationswerten und Reflexions-Farbwerten zu bestimmen.

Die Erfindung betrifft auch die Verwendung des hierin beschriebenen Modells in Vorrichtungen, Verfahren, Programmen und Geschäftsmodellen.

Im Folgenden wird eine Ausführungsform der vorliegenden Erfindung unter Bezugnahme auf die Zeichnungen beschrieben. Dabei werden weitere Vorteile und Merkmale der Erfindung offenbart. Verschiedene Merkmale unterschiedlicher Ausführungsformen können miteinander kombiniert werden.

Fig. 1 zeigt die Vernetzung eines fotografischen Labors mit Eingabegeräten und Ausgabegeräten;

Fig. 2 zeigt die Anwendung des erfindungsgemäßen ersten Verfahrens (Schritt 1 + 2) mit vorangeschaltetem Schritt 0;

Fig. 3 zeigt das erfindungsgemäße zweite Verfahren entsprechend der Ausführungsform der Fig. 2.

Fig. 4 erläutert ein Reflexionsmodell für ein lichtempfindliches Medium;

Fig. 1 zeigt eine schematische Ansicht eines Farbmanagements gemäß der Erfindung, bei dem ein gewünschter Farbraum oder Standardraum als gemeinsame Plattform in der Mitte dient. Vorzugsweise wird als Standardraum der CIE-Lab-Farbraum gewählt. Dieser hat gewünschte Eigenschaften, nämlich er ist unabhängig vom Typ eines Farbstoff-Systems, das mit einer Bilddarstellungsvorrichtung, Farbstoffen und einem Medium arbeitet und deckt die Farbräume aller möglichen Farbstoff-Systeme ab. Die im Farbraum dargestellten Farbdaten eines spezifischen Bildes sind nicht vollständig unabhängig vom Typ der Geräte, die bei der Erfassung und Digitalisierung der Bildinformation verwendet wurden (z.B. Kamera, Filmscanner), da die Details eines in diesem Farbraum dargestellten Bildes den Farbtonumfang bzw. Gamut dieser Eingabegeräte offenbaren, da verschiedene Eingabegeräte typischerweise unterschiedliche Teile des Farbraums abschneiden oder verzerren. Als bevorzugte und wichtige Eigenschaft ist jedoch der Farbraum so gestaltet, dass jede Farbe ihre eigene und gut definierte Position bzw. einen einzigartigen Bereich in dem Farbraum einnimmt. Vorzugsweise existieren weiter definierte Transformationen zwischen dem Farbraum und den verschiedenen Eingabe- oder Ausgabegeräten. Ausgabegeräte sind z.B. Farbstoff-Systeme, Monitore, digitale Speichermedien oder Netzwerkschnittstellen.

Vorzugsweise wird der CIE-Lab-Farbraum gewählt, der die folgenden Vorteile aufweist, oder ein Farbraum mit gleichen oder ähnlichen Vorteilen.

Der CIE-Lab-Farbraum ist an die Farbempfindlichkeit des menschlichen Auges angepasst. In dem Lab-Farbraum erscheint jedes Farbpaar, das um einen euklidischen Abstand 1 getrennt ist, für einen menschlichen Betrachter gleich weit voneinander entfernt. Ein mittlerer Betrachter ist dazu in der Lage, Farben bis zu etwa $\Delta E = [(\Delta L^2 + \Delta a^2 + \Delta b^2)]^{1/2} = 1$ zu unterscheiden. Die Helligkeit L wird von der chromatischen Information (Farbton und Sättigung) getrennt. Der Radius $[(a^2 + b^2)]^{1/2}$ in der (a,b)-Ebene ist ein Maß für die Farbsättigung. Der Winkel mit der a-Achse ist ein Maß für den Farbton.

Ein weiterer Vorteil des CIE-Lab-Farbraums liegt darin, dass er nicht auf einen bestimmten Farbtonumfang bzw. Gamut begrenzt ist. Dies ist z.B. ein Unterschied zu dem sRGB-Farbraum, ausgenommen man lässt auch negative sRGB-Werte zu.

Es gibt Softwareprogramme zur Bestimmung von Transformationen von Lab-Farbraum in einen RGB-Farbraum. Hierzu muss der Benutzer üblicherweise einen Testchart bzw. einen Testausdruck mit den Lab-Werten in eine Eingabevorrichtung (z.B. Scanner) eingeben. Die Lab-Werte werden optisch vermessen (z.B. Spektrometer) und die Antwort der Eingabevorrichtung wird z.B. in vorrichtungsspezifischen RGB-Daten ausgegeben. Durch einen Vergleich der ausgegebenen RGB-Daten mit den ursprünglichen Lab-Werten ist es möglich, eine Nachschlagtabelle zu erzeugen, die die Transformation von dem Lab-Raum in den RGB-Raum ermöglicht.

Bei Ausgabevorrichtungen erfolgt die Bestimmung der Transformation in einer ähnlichen Art und Weise. In die Ausgabevorrichtung wird ein Satz von RGB-Daten eingegeben und das Ergebnis der Ausgabe wird optisch analysiert. Zum Beispiel wird bei einem Drucker ein Testausdruck gedruckt und durch ein Spektrometer vermessen. Aus den Messergebnissen werden Lab-Werte bestimmt. Aus dem Vergleich der Lab-Werte mit den ursprünglichen RGB-Daten können dann wieder Nachschlagtabellen erzeugt werden, die zur Bestimmung der Transformation dienen. Bei der Kombination von Lab-Werten in RGB-Werten ergibt sich üblicherweise das Problem, dass die Ausgabevorrichtung nicht den Farbtonumfang bzw. Gamut der eingegebenen Lab-Werte voll wiedergeben kann. Dementsprechend werden nicht wiedergebbare Farbwerte in einer geeigneten Art und Weise auf den darstellbaren Farbtonumfang abgebildet. Dabei wird darauf geachtet, dass die eingegebenen Farben so wenig wie möglich durch die Ausgabevorrichtung geändert werden und die außen liegenden Farben in den Farbtonumfang der Ausgabevorrichtung hinein abgebildet werden.

Im Folgenden wird beispielhaft die Informationsverarbeitung von einem Scanner für einen Negativfilm zu CIE-Lab-Werten und von dort zu einem Printer, der ein Bild auf lichtempfindlichem Papier darstellt, beschrieben.

Bei dem Printer kann es sich beispielsweise um einen DMD-Printer handeln, bei dem Licht von einer Lichtquelle auf lichtempfindliches Fotopapier (z.B. Silberhalogenid-Fotopapier) projiziert wird. Bei dem DMD handelt es sich um ein Feld mit vielen kleinen Spiegeln, die jeweils um einen gewissen Winkel gekippt werden können. Das DMD-Feld wird verwendet, um das Papier pixelweise mit einer bestimmten Lichtmenge zu belichten. Verschiedene Farbfilter werden eingesetzt, um ein Belichtungslicht unterschiedlicher Farbe zu erzeugen (z.B. Rot, Grün und Blau). Die Farben Rot, Grün und Blau führen dann in dem lichtempfindlichen Papier zu den primären Farben Cyan, Magenta und Gelb.

Der Datenfluss für die mit einem Filmscanner erfassten Bilddaten bis zu dem CIE-Lab-Farbraum wird im Folgenden anhand der Fig. 2 erläutert. In einem Schritt 0 werden die von einem Scanner ermittelten Daten eines Films (Negativfilm) verarbeitet und aufbereitet, um sie unabhängig von spezifischen Filmeigenschaften zu machen. In einem Schritt 1 werden die so erzielten filmtypunabhängigen Daten in Farbstoffkonzentration konvertiert.

In einem nachfolgenden Schritt 2 werden am Ende CIE-Lab-Werte für eine gegebene Druckereingabe basierend auf den Farbstoffkonzentrationen vorhergesagt. Diese Werte entsprechen den Reflexions-Farbwerten. Die Kombination der Schritte 1 und 2 stellt ein Modell eines Mediums (z.B. fotografisches Papier) dar. Zusätzlich können auch Papierdichten CMY berechnet werden, wie sie von einem Densitometer gemessen würden.

Die Schritte verlaufen im Einzelnen wie folgt. Der Scanner für negative Filme tastet den fixierten negativen Film ab. Der Scanner beleuchtet dabei das Negativ mit einer Lichtquelle und erhält ein Intensitätsverhältnis zwischen einem reflektierten Intensitätsfluss, der von dem Film reflektiert wird und einem einfallenden Intensitätsfluss von der Lichtquelle. Diese Verhältnisse werden z.B. mittels drei Filtern, Rot (i = 1), Grün (i = 2) und Blau (i = 3), gemessen. Die zurückgegebenen Werte des Scanners werden als RGB-Intensitäten des Negativs kodiert. Falls z.B. das Bild ein stark gesättigtes Grün enthält, würde der Scanner einen RGB-Vektor für Magenta zurückgeben (nämlich etwa 1, 0, 1).

Die RGB-Intensitätsverhältnisse $I_i/I_0$ werden in RGB-Filmdichten konvertiert, wobei die Formel $D_{input}(i) = a_i \log_{10}(I_i/I_0) + b_i$ verwendet wird (S202). Für ein ideales System würden sich Werte $a_i = -1$ und $b_i = 0$ ergeben.

In einem nächsten Schritt (S204) kann eine sog. Eye-Tech-Korrektur Optimierungstransformation vorgenommen werden, wie sie in der europäischen Anmeldung EP 00 104 491.6 beschrieben ist. Diese Eye-Tech-Korrektur lässt sich beispielsweise als eine 3x3-Matrix **A**, einen dreidimensionalen Vektor c und einen dreidimensionalen Vektor **d(x)** darstellen, der von der Position x auf dem Bild abhängt. Dies erfolgt im Schritt S204 der Fig. 2. Die entsprechende Formel lautet wie folgt:

$$D_{film}(i) = \Sigma_j A_{ij} D_{input}(j) + c_i + d_i(x), \text{ wobei } i, j = 1, 2, 3$$

Die Matrix **A** entfernt im Wesentlichen einen Farbtrend bei der Grauabstufung, bevorzugt durch eine geeignete Rotationstransformation, Scherung und/oder Streckung. Bei analogen Systemen gibt es kein der Matrix **A** entsprechendes Merkmal, da bei analogen Systemen nur die Belichtungszeiten durch die drei Filter Rot, Grün und Blau geändert werden können. Damit kann ein analoges System im Gegensatz zu einem digitalen System nicht selektiv spezifische Farben ändern. Der dreidimensionale Vektor c entspricht dem Belichtungsfaktor der drei Filter RGB. Da die Dichten als Logarithmus der Intensitäten definiert sind, erscheinen die Belichtungsfaktoren als additive Konstanten. Der Vektor **d(x)** führt die lokale Dichtekorrektur durch und modifiziert die RGB-Belichtungen als eine Funktion der Position auf dem Bild. Die hierin erwähnten RGB-Daten sind rein beispielhaft. Selbstverständlich können auch andere Farbräume zur Darstellung der Daten verwendet werden. Die Optimierungstransformation führt die Optimierung durch, indem die zu optimierenden Bilddaten in einen anderen Farbraum transformiert werden, der für eine Farb-Korrektur (z.B. mittels Drehung) geeignet ist.

Das in EP 00 104 491.6 beschriebene Eye-Tech-Verfahren bzw. Optimierungsverfahren führt zu normalisierten Filmdichten $D_{film}(i)$, die um 0 zentriert sind und Werte von typischerweise in einem Bereich von [-0,5, 0,5] aufweisen. Gelegentlich kommt es vor, dass $D_{film}(i)$ auch außerhalb dieses Bereichs liegt. Die Filmdichten $D_{film}(i)$ sind am Ende des Eye-Tech-Verfahrens von den spezifischen Filmeigenschaften unabhängig. Ihre Maske wurde entfernt und die Grauskala ist basierend auf der spektralen Information von dem einzelnen Bild und stochastischen Daten über das Bild korrigiert. Die Daten $D_{film}(i)$ sind normalisierte, modifizierte Filmdichten bezüglich eines allgemeinen Films ohne Filmmaske, die z.B. als RGB-Dichten des Negativs ausgedrückt werden (S205).

Anstelle des im Schritt 0 dargestellten Verfahrens kann auch ein anderes Verfahren verwendet werden, um Bildsteuerdaten aufzubereiten, bevor sie für das erfindungsgemäße Modell eines Mediums verwendet werden. Auch können die Filmdaten in einem Schritt 0 (in S204) bereits einer Klassifikation unterzogen werden, die zu einer bildtypabhängigen Manipulation der Bilddaten führt. Beispielsweise kann die Helligkeit gewisser Bereiche des Bildes manipuliert werden oder die Farbverarbeitung je nach Bildtyp (z.B. viel blauer Himmel) unterschiedlich durchgeführt werden. Selbstverständlich kann auch auf den S204 verzichtet werden.

Die oben erwähnte lokale Dichtekorrektur stellt eine von vielen möglichen Bildverbesserungsalgorithmen dar, wie z.B. Kontrastverbesserung, Red-Eye-Removal, Scratch Removal usw., dar. Derartige Bildverbesserungsalgorithmen werden vorzugsweise an zwei Stellen verwendet, im Farbdichteraum, wie dies oben im Zusammenhang mit der lokalen Dichtekorrektur beschrieben wurde, und im Plattformraum, z.B. CIE-Lab-Standardfarbraum. Im Plattformraum werden vorzugsweise datenpfad-unabhängige Bildverarbeitungsprozesse angewendet, wie z.B. Weichzeichner und Red-Eye-Removal.

Die im Folgenden beschriebenen Schritte 1 und 2 stellen ein Beispiel für ein erfindungsgemäßes Modell für ein Medium dar. Dabei wird von einem lichtempfindlichen Medium ausgegangen, das z.B. mittels einer DMD belichtet wird. Das Belichtungssystem würde das Medium (z.B. Papier) in einem idealen Fall z.B. mit einem roten, grünen und blauen Bild belichten. Jedes dieser latenten Bilder wurde nur durch den Mediumfarbstoff (z.B. Papierfarbstoff) der entsprechenden Komplementärfarbe erzeugt bzw. durch optische Anregung im lichtempfindlichen Medium generiert. Beispielsweise würde das rote Bild nur ein Cyanbild auf dem Papier bewirken, ohne dass irgendein anderer Farbstoff dadurch beeinflusst oder erzeugt werden würde. In ähnlicher Weise würde ein grünes Bild nur zu einem magentafarbenen Bild auf dem Papier (oder in dem Papier) führen und das blaue Bild würde ein gelbes Bild erzeugen.

Ein Medium-Übersprechen tritt bei stark gesättigten Farben auf. Beispielsweise führt eine übermäßig lange Belichtung durch einen Blaufilter auch zu einer gewissen Menge an Cyanfarbstoff und Magentafarbstoff, abgesehen von dem gewünschten gelben Farbstoff. Falls die Belichtung lang genug ist, hat der gelbe Farbstoff seine Sättigungsgrenze erreicht, wohingegen die anderen Farben Cyan und Magenta sich immer noch in dem linearen Bereich befinden, bis sie letztendlich nach einer sehr langen Belichtung ebenfalls die Sättigung erreichen.

Bei der folgenden Darstellung des ersten Schrittes des erfindungsgemäßen Medium-Modells wird angenommen, dass das System aus Film und Medium gut abgestimmt ist, wie dies im idealen Fall für einen analogen Printer gilt. Das heißt, es wird davon ausgegangen, dass keine zusätzlichen Änderungen der Dichte (z.B. lokale Dichtesteuerung) erforderlich ist. Derartige Änderungen oder klassifikationsabhängige Änderungen können, wie bereits oben ausgeführt wurde, bereits in einem Schritt 0 durchgeführt werden oder auch an geeigneter Stelle bei den folgenden Schritten 1 und 2 zwischengeschaltet werden. Jedoch wird dies nicht näher detailliert erläutert.

Die Erfinder haben herausgefunden, dass Überspracheffekte bis zur ersten Ordnung vorzugsweise vernachlässigt werden können, so dass sich beispielsweise folgende 3x3-Einheitsmatrix **P** zur Beschreibung des Übersprechens verwenden lässt:

$$\mathbf{P} = \begin{pmatrix} 1 & 0 & 0 \\ 0 & 1 & 0 \\ 0 & 0 & 1 \end{pmatrix} \text{ und } D^*_{film}(i) = \Sigma_j P_{ij} D_{film}(j), \qquad i, j \in \{1, 2, 3\}$$

Man kann natürlich auch das Übersprechen (bis zu höheren Ordnungen) modellieren. Beispielsweise kann man von der Filmdichte abhängige außerdiagonale Elemente bei der obigen Matrix **P** einführen. Damit kann man unter Umständen bessere Ergebnisse für stark gesättigte Farben erzielen. Füllt man die außerdiagonalen Elemente der Matrix mit Werte ungleich 0, so sind diese Werte jedoch voraussichtlich erheblich kleiner als die diagonalen Werte. Bemerkenswert ist, dass eine Matrix **P** dazu dient, ein nicht gewünschtes Übersprechen des Filmpapiersystems zu modellieren. Die Matrix **P** berücksichtigt nicht ein beabsichtigtes Übersprechen (z.B. von zwischen den Schichten liegenden Kopplungsschichten), das dazu dient, Nachteile des lichtempfindlichen Papiers zu kompensieren (zumindest solange, wie das Übersprechen linear zunimmt). Diese Eigenschaften stellen inhärente Eigenschaften des Filmpapiersystems dar, deren Eigenschaften vorzugsweise nicht modifiziert werden sollen.

Ist in einem Schritt S206 das Medium-Übersprechen berücksichtigt worden, so folgt in einem nächsten Schritt S207 die Transformation der Filmdichten $D^*_{film}(i)$ in beispielsweise CMY-Farbstoffkonzentrationen $C_i$, i = 1, 2, 3. Die Filmdichten haben ein relativ flaches Profil als Funktion von $\log_{10}(T_{exp})$, wobei $T_{exp}$ die Belichtungszeit darstellt. Jedoch decken sie einen breiten Bereich von $\log_{10}(T_{exp})$ ab. Dies führt dazu, dass ein Negativfilm sehr tolerant gegenüber einer Überbelichtung oder Unterbelichtung ist. Ein Medium, z.B. fotografisches Papier, kompensiert dieses flache Profil und komprimiert das untere und obere Ende der $\log_{10}(T_{exp})$-Skala unter Verwendung einer charakteristischen Mediumfunktion, die typischerweise eine S-förmige Gestalt aufweist.

Die oben erwähnte Mediumfunktion dient dazu, Filmdichten $D^*_{film}(i)$ in CMY-Farbstoffkonzentrationen $C_i$ umzuwandeln, wobei i = 1 Cyan bezeichnet, i = 2 Magenta bezeichnet und i = 3 Gelb bezeichnet. Die S-förmige Funktion kann beispielsweise als Tanges Hyperbolicus beschrieben werden.

Im Folgenden wird der in Fig. 2 gezeigte Schritt 2 beschrieben. Die Farbstoffkonzentrationen beschreiben die Lichtreflexionseigenschaften der erzeugten Farbstoffe. Mit diesem Satz von n Farbstoffkonzentrationen $C_i$ wird ein sich ergebendes Reflexionsspektrum $R(\lambda)d\lambda$ abgeleitet, wobei der Kubelka-Munk-Ansatz mit einer einzigen Konstante und mit einer vereinfachten Saunderson-Korrektur verwendet wird. Dieser Ansatz ist in Kang, H.R. (1997a), 2.6 Kubelka-Munk-Theorie, in: Color Technology for Electronic Imaging Devices, SPIE Optical Engineering Press (Washington, USA), Seiten 48-54, beschrieben. Das Modell von Kubelka-Munk stellt nur eine mögliche Realisation dar. Eine weitere Möglichkeit besteht z.B. in einem einfachen Modell, bei dem ein linearer Zusammenhang zwischen spektralen Farbkonzentrationen und spektralen Farbdichten hergestellt wird. Auch kann das Modell mit dem Kubelka-Munk-Ansatz erweitert werden, z.B. auf ein Drei-Farbschichten-Modell. Am Ende des zweiten Schrittes wird schließlich das Reflexionsspektrum $R(\lambda)d\lambda$ mit dem relativen Spektrum der Beleuchtungsquelle z. B. ($D_{65}$, 2°) gewichtet und mit Farbabstimmfunktionen des CIE-XYZ-Raums gefaltet (S211). Das sich ergebende CIE-XYZ-Triplet wird in Lab-Werte konvertiert, wobei die Standardformel und der Weißpunkt des Papiers bzw. Mediums verwendet wird. Auch können insbesondere im Rahmen des Schrittes 2 weitere Eigenschaften insbesondere des Mediums berücksichtigt werden, die das Erscheinungsbild beeinflussen, wie z.B., ob das Medium glänzend oder matt ist. Dementsprechend können z.B. unterschiedliche Reflexionsspektren oder Modellparameter gewählt werden.

Das Modell berechnet sich ergebende Lab-Werte für eine Mischung aus n Farbstoffen. Dabei wird zwischen Drucker-RGB-Eingangsdaten und Farbstoffkonzentrationen $C_i$ unterschieden. Alle Werte werden auf 1 normalisiert und liegen in dem Intervall [0,1]. Der Index i läuft von 1 bis n.

Aus den spektralen Reflexionsspektren können auch ANSI-Status-A-Papierdichten oder andere Farbdichtewerte, die von einem Fotodensitometer gemessen würden, berechnet werden, und zwar durch Faltung mit den entsprechenden Farbabstimmfunktionen.

Die eingegebenen Farbstoffkonzentrationen, die für das Modell benötigt werden und zur Beschreibung der Lichtreflexionseigenschaften der Farbstoffe dienen, werden als $C_i$ bezeichnet. Sie stellen die Wichtungsfaktoren für den Farbstoff i in dem Modell dar. Beispielsweise ist die Reflexion eines Lichts einer bestimmten Farbe umso niedriger, je größer die Farbstoffkonzentration $C_i$ ist. Die Konzentration $C_i$ zeigt weiter an, wie viel Farbe aus dem "Farbtopf" mit der Nummer i benötigt wird, um das gewünschte Ergebnis zu erzielen. Die Farbstoffkonzentrationen $C_i$ sind Modell-Farbstoffkonzentrationen und stellen hauptsächlich ein mathematisches Konstrukt dar. Sie stellen weiter ein Beispiel für die Beschreibung einer Lichtreflexionseigenschaft dar, die die Stärke der Lichtreflexion für eine bestimmte Farbe beschreibt.

Es gibt keine obere Grenze für die Anzahl der Farbstoffe, jedoch sollten vorzugsweise wenigstens drei unabhängige Primärfarben verwendet werden. Eine Primärfarbe kann nicht durch die Mischung von anderen Farben des Farbensatzes von Primärfarben erzeugt werden. Da das Auge mit drei unabhängigen Farbsensoren (Rot, Grün = Helligkeit, Blau) ausgestattet ist, benötigt jede vollständige Beschreibung des Farbraums wenigstens drei Primärfarben oder Basisfarben. Die Drucker-RGB-Eingangsdaten stellen ein derartiges minimales System von Basisfarben dar. Für ein fotografisches Papier bzw. Medium stellt eine typische Wahl eines Farbbasissystems der Satz mit C, M, Y dar. Ein DMD-Drucker führt beispielsweise, eine Belichtung mit drei Farben R, G und B durch, die dann zu den Komplementärfarben C, M und Y führen. Die Erfinder haben festgestellt, dass das erfindungsgemäße Modell bereits für drei Primärfarben zu guten Ergebnissen führt. Besonders gute Ergebnisse werden erzielt, wenn Farben mit zwei unterschiedlichen Sättigungsgraden dem Modell zu Grunde gelegt werden. Zur Erhöhung der Genauigkeit des Modells kann man mehr Rasterpunkte bzw. Interpolationspunkte in den Farbraum einfügen, um eine exaktere Anpassung an die gemessenen Werte zu erzielen.

Ein DMD-Drucker wird vorzugsweise durch die Vermessung von Farbflecken bzw. Farbtestfeldern kalibriert, wobei die Farbtestfelder Farbwerte beschreiben, die auf der Grauachse liegen und von Weiß nach Schwarz reichen. Dadurch ergibt sich ein Maß für die S-förmige Dynamikkurve, die die vom Medium dargestellte Farbdichte als Funktion der Belichtungszeit mit einer definierten Belichtungsfarbe beschreibt. Von dieser Medium-Farbdichte wird angenommen, dass sie eine Funktion der Farbstoffkonzentration ist. Da die hierin beschriebenen Farbstoffkonzentrationen nur für ein Modell gelten also "Modell-Farbstoffkonzentrationen" sind, können sie einfach als direkt proportional oder gleich den für eine definierte Belichtungsfarbe erzielten Medium-Farbwerten gesetzt werden. Dabei wird z. B. angenommen, dass die definierte Belichtungsfarbe nur einen bestimmten Farbstofftyp erzeugt. Die Medium-Farbdichten werden hierin auch als Papierdichten bezeichnet, da Fotopapier als Medium dient, das durch Belichtungslicht belichtet wird. Zur Messung der Medium-Farbdichte kann z.B. ein Densitometer verwendet werden. Für einen CIE-Standardbeobachter wird eine $D_{65}$-Lichtquelle bei einem Öffnungswinkel von 2° angenommen.

Im ersten wie im zweiten Verfahren kann das Modell folgendermaßen kalibriert werden. Es wird die Form der Sättigungskurve so bestimmt, dass ein vorgegebener Satz von eingegebenen Bildsteuerdaten (Input-Daten), der mit dem Modell transformiert wird, einem zugehörigen Satz von Reflexionsfarbwerten (Output-Datensatz) möglichst gut entsprechen. Dazu genügt ein Satz von Farbwerten, die für ausgewählte Farben z. B. CMY dichtemäßig von der Minimaldichte bis zur Maximaldichte (beispielsweise 10 bis 32 Werte) variieren. Für die Sättigungskurve kommen verschiedene Beschreibungen in Frage, z.B. eine tanh-Funktion mit zwei Parametern x0,b: $y = \tanh((x - x0) * b)$; eine der tanh ähnliche Funktion mit zwei bis vier weiteren Parametern, die eine mögliche Asymmetrie der Funktion beschreiben; und eine stückweise lineare Funktion mit typischerweise 18 bis 32 Schnittstellen. Für das oben beschriebene Ausführungsbeispiel werden die zuerst und zuletzt genannte Funktion für die Anpassung des Dynamikumfangs des Bildsteuerdaten-Farbenraums an den Dynamikumfang der Lichtmodulatoren bevorzugt, wobei die erste Funktion mit sehr wenigen Farbwerten auskommen würde, um eine Kalibrierung durchzuführen, wobei die Parameter mit einer linearen Regression bestimmt werden. Im Fall der dritten Funktion wird diese direkt aus den Input- und Output-Daten aufgebaut.

Bei den Input-Daten des Datensatzes im ersten Verfahren handelt es sich beispielsweise um normalisierte Filmdichten D(j), die auf Testpatches von einem Negativ gemessen werden oder um digitale RGB-Bilddaten, die dazu bestimmt sind in einen Drucker eingegeben zu werden. Bei den Output-Daten für das erste Verfahren handelt es sich beispielsweise um die gewünschten Papierdichten CMY(j) (beispielsweise so wie eine analoge Belichtung des Test-Negativs reproduziert), die möglichst für jeden Farbstoff des Systems die darstellbaren Farbdichten-Bandbreite abdecken.

Im zweiten Verfahren dienen als Output-Datensatz vorzugsweise die Steuerdichten E(j) (z. B. RGB-Steuerwerte zur Ansteuerung eines Druckers) zur Erzeugung eines Satzes von Testpatches und als Input-Datensatz gemessene Papierdichten CMY(j) von Testpatches, die mit den Steuerdichten E(j) produziert wurden. Dabei wird der Satz von Steuerdichten E(j) vorzugsweise iterativ so angepasst, dass am Ende der Kalibration gewünschte Zielpapierdichten (z.B. Grauwerte von Dmin bis Dmax der Farben C, M und Y) erreicht werden.

Die Kalibrierung kann auch ausgehend vom CIE-Lab gemacht werden, doch wird die Kalibrierung mit Papierdichten CMY vorgezogen.

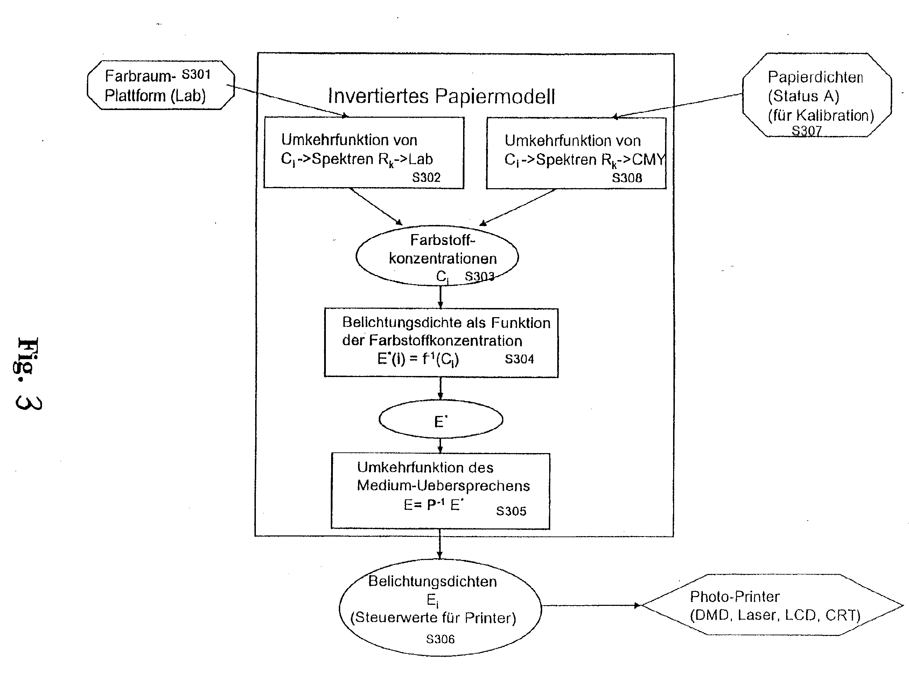

Die Fig. 3 zeigt das der Fig. 2 entsprechende inverse Papiermodell, bei dem die zu den Schritten S207, S208 und S209 inversen Schritte ebenfalls zusammengefasst sind. Die im Schritt S304 beschriebenen Belichtungsdichten sind wiederum die Farbstoffsteuerwerte.

Wie aus Fig. 2 (S214) und Fig. 3 (S307) entnehmbar, kann zwischen dem Papiermodell und dem invertierten Papiermodell nicht nur die Farbraumplattform (S213, S301), sondern können auch die Papierdichten (S214, S307) vermitteln. Die Papierdichten stellen ein besonderes Beispiel für eine Farbraum-Plattform dar.

Im Folgenden wird die Berechnung eines Reflexionsspektrums gemäß Schritt S210 beschrieben. Zur Berechnung wird die Kubelka-Munk-Theorie mit einer einzigen Konstante (single constant Kubelka-Munk theory) verwendet. Der Kubelka-Munk-Ansatz wird eingesetzt, um Reflexionsspektren $R(\lambda)d\lambda$ für einen gegebenen Satz von Farbstoffkonzentrationen $C_i$ zu erzeugen. Die Reflexionsspektren $R(\lambda)d\lambda$ werden mit einem normalisierten, relativen Spektrum $\Gamma(\lambda)d\lambda$ gewichtet, wobei das relative Spektrum wie folgt normiert ist:

$$\int \Gamma(\lambda)d\lambda / \int d\lambda = 1$$

Die Lichtquelle hat gegebene Eigenschaften, wie z.B. die $D_{65}$-Lichtquelle. Die Wichtung wird wie folgt durchgeführt:

$$R'(\lambda)d\lambda = R(\lambda)\Gamma(\lambda)d\lambda$$

Danach wird $R'(\lambda)d\lambda$ mit den Farbabstimmfunktionen (Farbempfindlichkeitskurven) des CIE-XYZ-Standardbeobachters mit einem Öffnungswinkel von 2° gefaltet. Die CIE-XYZ-Werte werden in CIE-Lab-Werte unter Verwendung von Standardformeln konvertiert.

Zur Berechnung des Modellspektrums sind eine Reihe von Spektren erforderlich, die sich z.B. durch spektrale Messungen von Testausdrucken ermitteln lassen. So ist ein gemessenes (oder rechnerisch ermitteltes) Reflexionsspektrum für einen jeden Farbstoff in dem Farbensatz erforderlich. Für den Fall eines Drei-Farben-Systems wird das Reflexionsspektrum von Cyan, Magenta, Gelb sowie das Spektrum des weißen Papiers erforderlich. Zur Erzeugung entsprechender Testausdrucke werden bevorzugt bei der Ansteuerung des Druckers maximale Drucker-RGB-Daten verwendet, um die höchstmögliche Sättigung der Farben zu erzielen. Das Modell könnte auch mit ungesättigten Farben funktionieren, wenn man Farbstoffkonzentrationen größer als 1 zulassen würde. Auch können Reflexionsspektren in Abhängigkeit von der Farbsättigung ermittelt werden.

Ergibt sich das Reflexionsspektrum eines durch das Medium dargestellten Bildes im Zusammenspiel mit dem Reflexionsspektrum des nicht mit Farbstoff versehenen Mediums, so wird vorzugsweise das Reflexionsspektrum des Mediums vermessen. Bei Papier entspricht dies z.B. der Vermessung eines weißen Feldes.

Zur Berechnung der Reflexionsspektren R sind weiterhin die bekannten CIE-XYZ-Farbabstimmfunktionen und das relative Spektrum einer Standardlichtquelle, z.B. $D_{65}$, erforderlich.

Die im Folgenden beschriebene Bestimmung der Reflexionsspektren bezieht sich auf ein lichtempfindliches Papier (Silberhalogenid-Papier). Eine ähnliche Betrachtung kann z.B. für ein System aus Tintenstrahldrucker und Normalpapier erfolgen, wie sie z.B. in der Druckschrift Kang, H.R. (1997), 13.2 Dye Diffusion Thermal Transfer, in: Color Technology for Electronic Imaging Devices, SPIE Optical Engineering Press (Washington, USA), Seiten 333-341, beschrieben ist.

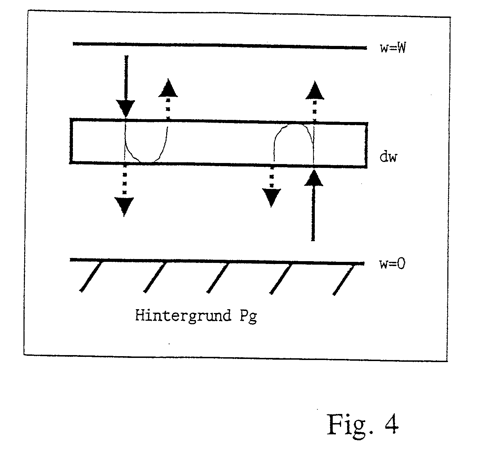

Kubelka und Munk formulierten eine Theorie für eine Farbmischung mit kontinuierlichen Farbtönen. Ihre Theorie basiert auf zwei Lichtkanälen, die in entgegengesetzte Richtungen laufen (siehe Fig. 4). Das Licht wird absorbiert und in nur zwei Richtungen, nämlich nach oben und nach unten, gestreut. Man nimmt an, dass die farbige Schicht homogen ist und an einem Hintergrundmedium haftet bzw. oberhalb des Hintergrundmediums angeordnet ist. Das Hintergrundmedium weist eine spektrale Reflexion von $P_g(\lambda)$ auf. Die farbige Schicht selbst hat eine Dicke von W, die sich von w = 0 bis w = W erstreckt. Bei einer infinitesimal dünnen farbigen Schicht dw kann die Absorptionsrate und Streurate für nach oben gerichtetes Licht und nach unten gerichtetes Licht basierend auf dem spektralen Absorptionskoeffizienten $K(\lambda)$ und Streukoeffizienten $S(\lambda)$ bestimmt werden. Jeder der zwei Lichtkanäle verliert Licht auf Grund von Streuung und Absorption, die durch die beiden Koeffizienten K und S jeweils beschrieben werden. Die beiden Kanäle gewinnen aber jeweils von dem anderen Kanal Licht durch Streuung (Koeffizient S). Das Licht, das in die Richtung des reflektierten Lichtes fließt (das heißt in positive Richtung dw), wird als positiv angesehen. Dadurch ergibt sich ein negatives Vorzeichen für den di/dw-Ausdruck:

$$-di/dw = - (K + S)i + Sj$$

$$dj/dw = - (K + S)j + Si$$

Durch Substitution von $\Psi = j/i$ erhält man $d\Psi = (i\,dj - j\,di)/i^2$. Das obige System der zwei Differenzialgleichungen kann zu einer Gleichung summiert werden:

$$d\Psi/dw = S - 2(K + S)\Psi + S\Psi^2$$

Dies auch kann auch wie folgt ausgedrückt werden:

$$\int dw = \int d\Psi/[S - 2(K + S)\Psi + S\Psi^2]$$

Für einen Streukoeffizienten S = 0 und den folgenden Grenzbedingungen:

$$w = 0: \qquad \Psi = P_g$$

$$w = W: \qquad \Psi = P \ [P(\lambda) \text{ ist die Reflexion des Farbfilms}]$$

stellt Kang in der obigen erwähnten Druckschrift, die die Kubelka-Munk-Theorie betrifft, eine Lösung der Differenzialgleichung vor. Mit einer Saunderson-Korrektur wird das gemessene Reflexionsspektrum $R(\lambda)$ mit dem Modell-Reflexionsspektrum $P(\lambda)$ verbunden.

Das gemessene Reflexionsspektrum R ist das mit einem Spektrometer gemessene Reflexionsspektrum, wobei bei der Messung der Papierhintergrund mitgemessen wird. Mittels der Saunderson-Korrektur kann man die gemessenen Reflexionsspektren R zu Modellspektren P umwandeln und umgekehrt. Dabei handelt es sich um eine Transformation von Messdaten zu Modelldaten, wobei auch hier die Modellspektren P noch den Papierhintergrund, soweit er mit gemessen wurde, beinhalten. Die Absorptionsspektren K sind ohne Hintergrund, denn dieser wird mit Hilfe von Pg entfernt, wobei Pg das Modellspektrum des Hintergrunds, also z.B. das Modellspektrum von Papierweiß ist. Die Absorptionsspektren K verhalten sich linear in den Konzentrationen und können gemischt werden.

Für die Beziehung zwischen P und R gilt die Saunderson-Korrektur, also gilt:

$$P(\lambda) = R(\lambda) / [(1 - f_s) (1 - f_i) + f_i R(\lambda)],$$

wobei $f_s$ eine Konstante ist, die die Oberflächenreflektivität beschreibt und $f_i$ eine Korrektur hinsichtlich der mediuminternen Streuung vornimmt. In der Druckschrift F.C. Williams und F.R. Claper (1953), Multiple Internal Reflections in Photographic Color Prints, J. Opt. Soc., 43, 595-599, ergibt sich $f_i = 0{,}615$ und $f_s = 0$ oder

$$P(\lambda) = R(\lambda) / [(1 - f_i) + f_i R(\lambda)].$$

Darauffolgend wird P(λ) in spektrale Absorptionen K(λ) konvertiert, wobei

$$K_i(\lambda) = -0,5 \ln(P(\lambda) / P_g(\lambda))$$

gilt, wobei $P_g(\lambda)$ der Wert von P(λ) des Papiers ist. Diesbezüglich wird nochmals an die oben erwähnte Druckschrift von Kang, H.R. verwiesen.

Für die Gesamtabsorption der Farbstoffe ergibt sich:

$$K(\lambda) = \Sigma_i \; C_i \; K_i(\lambda),$$

wobei $K_i(\lambda)$ die spektrale Absorption des Farbstoffes i und $C_i$ die entsprechende Farbstoffkonzentration darstellt und durch die Summierung die oben erwähnte zweite Art des Übersprechens berücksichtigt wird.

Die gemessenen Reflexionsspektren werden also in Modellspektren P und diese wiederum zu Absorptionsspektren K umgewandelt. Für die letzte Umwandlung wird Pg benötigt, das heißt das Modellspektrum P des Hintergrundes (Papierweiß), welches sich aus dem Reflexionsspektrum R des Hintergrundes (Papiers) ableiten lässt. Die Absorptionsspektren K werden entsprechend den Konzentrationen gemischt, die sich ja, wie oben erwähnt wurde, linear verhalten und deshalb problemlos gemischt werden können. Ist nun der Mischungsprozess abgeschlossen, so können die obigen Schritte wieder umgekehrt durchgeführt werden, um das Reflexionsspektrum R zu erhalten. Ausgehend von dem nach der Mischung erhaltenen Absorptionsspektrum K wird das Reflexionsspektrum des Hintergrundes berücksichtigt, um das (gemischte) Modellspektrum P zu erhalten, aus dem dann wiederum das gemischte und modellierte Reflexionsspektrum R erhalten wird. Die Absorptionsspektren K dienen also dazu, eine modellmäßige Mischung der Farbstoffe entsprechend den durch das Modell bestimmten Farbstoffkonzentrationen zu ermöglichen.

Hat man nun das Reflexionsspektrum R bestimmt, so wird dieses mit den drei CIE-Farbempfindlichkeitskurven von Rot, Grün und Blau gefaltet, wodurch sich ein CIE-XYZ-Vektor ergibt. Aus diesem werden dann die Lab-Werte in bekannter Weise berechnet.

Aus Messungen von Reflexionsspektren an Testfeldern einer bestimmten Farbe lassen sich somit die Absorptionsspektren K für eine bestimmte Farbe bestimmen, die dann bei einem realen Modell im Wesentlichen unverändert für den oben beschriebenen Mischvorgang verwendet werden und bei einem idealen Modell vor der Verwendung noch idealisiert werden können. Bei einem idealen Modell können auch theoretische Absorptionsspektren K eingesetzt werden.

Der Schritt 1 des in Fig. 2 gezeigten Verfahrens lässt sich beispielsweise auch mit jeweils einer eindimensionalen Funktion für jede Farbe (z.B. drei Farben) beschreiben, wobei die Funktionen insbesondere die S-Kurve für jede Farbe beschreiben. Der Schritt 2 des in Fig. 2 gezeigten Verfahrens wird vorzugsweise durch mehrdimensionale, insbesondere dreidimensionale Nachschlagtabellen durchgeführt, die die eingehenden Dichten in den Lab-Raum konvertieren. Die Tabellenwerte basieren auf dem hinein erläuterten Modell.

Das oben beschriebene Modell eines Systems aus Bilddarstellungsvorrichtung und Medium wurde dazu verwendet, in das System eingehende Bilddaten, die z.B. von einem Film oder einer Digitalkamera stammen, so umzurechnen, dass das Erscheinungsbild ("appearance") eines durch das System erzeugten Bildes von dem Modell ausgegeben wird (z.B. in einem Standard CIE-Lab-Farbraum). Das Modell kann auch für einen Datendurchfluss in der umgekehrten Richtung verwendet werden. In diesem inversen Fall werden die Bilddaten berechnet, die in ein System eingegeben werden sollten, um ein Bild zu erzielen, dessen Aussehen in einem gegebenen Farbraum (z.B. CIE-Lab-Farbraum) beschrieben ist.

Vorteilhaft lässt sich ein Modell mit Datendurchfluss in einer Richtung und ein Modell mit Datendurchfluss in inverser Richtung kombinieren. Beschreibt das erste Modell (Verfahren) ein ideales System mit idealen Eigenschaften, so lässt sich durch das erste Modell (Verfahren) das ideale Aussehen von mit dem idealen System erzeugten Bilddaten berechnen. Das zweite Modell (Verfahren), das für einen inversen Datendurchfluss verwendet wird, beschreibt vorzugsweise ein reales System, das für die Bilderzeugung verwendet werden soll. Dieses zweite Modell wandelt dann das ideale Bild in Bilddaten um, die zur Erzeugung des idealen Bildes oder eines diesen möglichst angenäherten Bildes mit dem realen System geeignet sind.

Ein wesentlicher Vorteil des erfindungsgemäßen Modells gegenüber einem Black-Box-Modell liegt darin, dass die Anzahl der Farbtonwerte, die zur Justage des Modells benötigt werden (Testausdrucke bzw. Testfarbfelder), erheblich gegenüber einem Black-Box-Modell verringert werden können. Beispielsweise werden mit Testbildern, die nur drei Farben und einer Anzahl von Farbfeldern, die Grautöne beschreiben, darstellen, bereits gute Ergebnisse erzielt. Weiter ergeben sich durch das Modell stetige Daten und die Gamut-Grenzen können einfach berechnet werden. Grundsätzlich genügt ein geringer Satz von Farbfeldern von 4 bis 28 Feldern, die mit einem Spektrometer vermessen werden. In manchen Fällen kann auch eine typische oder ideale spektrale Antwort eines Mediums (fotografisches Papier) bzw.

von Farbstoffen genügen, um die Lab-Werte und Papierdichten zu berechnen. Dies gilt insbesondere dann, wenn die Belichtung eines mittleren Filmes auf ein mittleres Papier zu beschreiben ist. Auf Grund der Messwerte werden dann vorzugsweise Parameter geändert oder bestimmt, die die Funktionen oder entsprechend Tabellenwerte z.B. in S207, S210, S302, S308, S304, und/oder S305 festlegen.

Auch können ICC-Profile aus dem Modell erstellt werden, die dann zusammen mit anderen Komponenten (z.B. Eingabevorrichtungen), die ICC-Profildaten liefern, verwendet werden können.

Bei dem oben im Zusammenhang mit Fig. 2 beschriebenen Datendurchfluss erfolgt im Schritt 2 die Faltung von Reflexionsspektren einer Anzahl von Farbstoffen (und des Hintergrunds) mit insbesondere drei spektralen Empfindlichkeitsfunktionen, die beispielsweise die spektrale Wahrnehmung des menschlichen Auges beschreiben, so dass drei Skalare (z.B. X, Y, Z des CIE-XYZ-Raums) führen. Erfolgt der Datenfluss durch das erfindungsgemäße Modell in einer umgekehrten Richtung, so ist eine Entfaltung erforderlich, um die Farbstoffkonzentrationen (Lichtreflexionsmodulationswerte) bzw. entsprechende Drucker-RGB-Eingabedaten (Farbstoffsteuerwerte) zu erzielen. Die Entfaltung kann z.B. dadurch durchgeführt werden, dass eine Vielfalt möglicher Reflexionsspektren für einen gegebenen Satz von Primärspektren, die jeweils einem Farbstoff zugeordnet sind, durchgerechnet werden und mit dem gemessenen Spektrum verglichen werden, um so die Primärspektren zu bestimmen, die in Kombination das gemessene Spektrum ergeben. Alternativ können auch Polynom-Regressionsverfahren angewendet werden. Die so erzielten Ergebnisse werden mit einer Nachschlagtabelle von Deltawerten korrigiert.

Die Gamut-Grenzen werden durch Abbildung der Randflächen des Drucker-RGB-Würfels bestimmt. Die Lab-Werte werden unter Berücksichtigung der Gamut-Grenzen mit einem Vorhersage-Korrektur-Verfahren bestimmt. Dabei wird zuerst bestimmt, ob ein gegebener Lab-Punkt $\Lambda$ sich innerhalb oder außerhalb des Gamuts befindet. Danach wird der Schnittpunkt $\Pi$ der Gamut-Grenze mit einer gegebenen Kurve $\gamma$ durch den Lab-Punkt A unter Verwendung eines Vorhersage-Korrektur-Verfahrens bestimmt. Basierend auf dem Abstand $|\Lambda\Pi|$ entlang der Kurve $\gamma$ wird der Ursprungs-Lab-Punkt $\Lambda$ auf einen Punkt $\Lambda'$ abgebildet. Das inverse Modell gibt die Farbstoffsteuerwerte bzw. Drucker-RGB-Werte bei der Eingabe des Lab-Punktes $\Lambda'$ aus. Ein Satz von $\gamma$-Kurven wird im einfachsten Fall durch Geraden gebildet, die parallel zu der (a,b)-Ebene sind und die L-Achse schneiden.

Das zweite Verfahren oder das invertierte Papiermodell wird detaillierter in Fig. 3 erläutert. Der Ausgangspunkt sind Modulationsfarbwerte, die in der Farbraumplattform (LAB) dargestellt sind (S301) oder Modulationsfarbwerte, die als Papierdichten beschrieben sind (S307).

Die Modulationsfarbwerte werden einer Umkehrfunktion unterzogen (S302 oder S308). Die Umkehrfunktion kehrt die Funktion, die die Farbstoffkonzentration $C_i$ über die Spektren $R_k$ mit den Farbraumplattformwerten oder Papierdichten in Beziehung setzt, um. Durch Umkehren dieser Funktion werden die Farbstoffkonzentrationen $C_i$ im Schritt S303 erhalten. Die diesen Farbstoffkonzentrationen entsprechenden Belichtungsdichten des Lichtes, das bei Einfall auf ein Fotopapier die Farbstoffkonzentrationen erzeugt, werden wiederum durch Umkehr einer Funktion erhalten. Bei dieser Funktion handelt es sich um die in Fig. 2 im Schritt S207 gezeigte Funktion, die die Belichtungsdichten mit den Farbstoffkonzentrationen in Beziehung setzt. Die Belichtungsdichten sind in Fig. 3 als E* im Schritt S304 bezeichnet. Sind nun die Belichtungsdichten E* erhalten worden, so wird eine erneute Umkehrfunktion angewendet, die das Mediumübersprechen umgekehrt zu dem Schritt S206 berücksichtigt. Diese Umkehrfunktion wird im Schritt S305 angewendet und führt zu Belichtungsdichten $E_i$, aus denen Steuerwerte zum Ansteuern eines Printers, der Fotopapier belichtet, gewonnen werden können. Zur Herleitung der Umkehrfunktionen wird wiederum auf die oben verwiesen Druckschrift in Kang, H.R., Chapter 3, Seite 55-63, verwiesen.

**Patentansprüche**

1. Verfahren zum Modellieren fotografischer Bilder, die durch Lichtmodulatoren dargestellt werden, die die Intensität des einfallenden Lichts spektral entsprechend Lichtmodulationswerten modulieren, wobei ein Modell-Bilddarstellungssystem in Antwort auf Bildsteuerdaten die Lichtmodulationswerte der Lichtmodulatoren bestimmt, mit folgenden Schritten:

   a) die Lichtmodulationswerte (Ci) der für die Bilddarstellung verwendeten Lichtmodulatoren werden basierend auf den eingegebenen Bildsteuerdaten durch Modellierung der Antwort des Modell-Bilddarstellungssystems auf die eingegebenen Bildsteuerdaten berechnet,
   b) Modulations-Farbwerte (S213,S214), die die Farbwerte des durch die Lichtmodulatoren dargestellten Bildes beschreiben, das sich bei Lichteinfall auf die Lichtmodulatoren ergibt, werden basierend auf den berechneten Lichtmodulationswerten (Ci) errechnet.

2. Verfahren zum Modellieren von fotografischen Bilddaten, die die Erzeugung eines gegebenen Bildes mittels eines Modell-Bilddarstellungssystems steuern, wobei das Modell-Bilddarstellungssystem das Bild mittels Lichtmodulatoren darstellt, die die Intensität und/oder das Spektrum des einfallenden Lichtes entsprechend Lichtmodulationswerten modulieren, wobei das Modell-Bilddarstellungssystem in Antwort auf Bildsteuerdaten die Lichtmodulationswerte der Lichtmodulatoren bestimmt, mit folgenden Schritten:

a) Lichtmodulationswerte (Ci, S303) werden basierend auf Modulations-Farbwerten (S301, S307), die die Farbwerte des durch die Lichtmodulatoren dargestellten Bildes bei Lichteinfall auf das Bild beschreiben, errechnet,

b) dem Bild entsprechende Bildsteuerdaten (S306), die zur Erzeugung des Bildes mittels Lichtmodulatoren führen, wenn sie in das Modell-Bilddarstellungssystem eingegeben werden, werden basierend auf den berechneten Lichtmodulationswerten (Ci, S303) berechnet, indem die modellierte Antwort des Modell-Bilddarstellungssystems auf eingehende Bilddaten invertiert wird.

3. Verfahren nach Anspruch 1 oder 2, bei welchem mehrere Typen von Lichtmodulatoren gegeben sind, wobei jeder Typ von Lichtmodulator gegebene spektrale Modulationseigenschaften hat und die Modulationsstärke, die in Bildbereichen durch Lichtmodulatoren eines bestimmten Typs erzielt wird, durch das Modell-Bilddarstellungssystem bestimmbar ist, wobei die Modulationsstärke von den Bildsteuerdaten abhängt und diese Abhängigkeit bei der Modellierung der Antwort des Modell-Bilddarstellungssystems auf die eingegebenen Bilddaten berücksichtigt wird.

4. Verfahren nach Anspruch 3, bei welchem die Lichtmodulationswerte die Modulationsstärke der Lichtmodulatoren in den Bildbereichen beschreiben und die Lichtmodulationswerte (Ci) zu den Modulations-Farbwerten (Lab) durch die spektralen Modulationseigenschaften in Beziehung gesetzt werden.

5. Verfahren nach Anspruch 1 bis 4, **dadurch gekennzeichnet, dass** die Modellierung der Antwort des Modell-Bilddarstellungssystems die Anpassung des im Bildsteuerdaten-Farbenraum darstellbaren Dynamikumfangs der Farbdichten an den durch die Lichtmodulatoren darstellbaren Dynamikumfang der Farbdichten beschreibt.

6. Verfahren nach einem der Ansprüche 1 bis 5, **dadurch gekennzeichnet, dass** die Modellierung der Antwort des Modell-Bilddarstellungssystems ein Übersprechen bei den Lichtmodulatoren beschreibt, wobei das Übersprechen bewirkt, dass die spektralen Eigenschaften der Lichtmodulatoren spektral überlappen.

7. Verfahren nach einem der Ansprüche 1 bis 4, **dadurch gekennzeichnet, dass** die die Modellierung der Antwort des Modell-Bilddarstellungssystems eine Anpassung des im Farbenraum der Bildsteuerdaten darstellbaren Farbtonumfangs an den durch die Lichtmodulatoren darstellbaren Farbtonumfang beschreibt.

8. Verfahren nach einem der Ansprüche 1 bis 7, **dadurch gekennzeichnet, dass** die Lichtmodulatoren Farbstoffe sind und die Lichtmodulationswerte die Konzentrationen und/oder Mengen und/oder räumliche Verteilungen von Farbstoffen bei einem gegebenen Satz von zur Bilderzeugung verwendeten Farbstoffen bestimmen.

9. Verfahren nach einem der Ansprüche 1 bis 8, **dadurch gekennzeichnet, dass** die Lichtmodulationswerte zu den Modulations-Farbwerten unter Berücksichtigung des Lichteinfalls in Beziehung gesetzt werden, und zwar basierend auf den Absorptions-, Transmissions- und/oder Reflexionsspektren der Lichtmodulatoren (S210) und auf den Emissionseigenschaften der Beleuchtungs-Lichtquelle (S211) und/oder basierend auf modellierten Lichtmodulationseigenschaften eines Mediums, das Teil des Modell-Bilddarstellungssystems ist und in und/oder auf dem die Lichtmodulatoren angeordnet sind.

10. Verfahren nach einem der vorhergehenden Ansprüche, wobei zuerst das Verfahren nach einem der Ansprüche 1 bis 9, soweit vom Anspruch 1 abhängig, und dann, basierend auf den bestimmten Modulations-Farbwerten das Verfahren nach einem der Ansprüche 2 bis 9, soweit vom Anspruch 2 abhängig, durchgeführt wird.

11. Verfahren nach Anspruch 10, wobei zur Bestimmung der Modulations-Farbwerte unter Verwendung des Verfahrens nach Anspruch 1 ein idealisiertes Modell-Bilddarstellungssystem zu Grund gelegt wird und zur Berechnung der Bilddaten unter Verwendung des Verfahrens nach Anspruch 2 ein anderes reales Modell-Bilddarstellungssystem zu Grunde gelegt wird, wobei bei einem idealisierten Modell-Bilddarstellungssystem die Differenz zwischen den durch die Bildsteuerdaten der Ansprüche 1 bis 9, soweit vom Anspruch 1 abhängig, dargestellten Farbwerte und den Modulations-Farbwerten geringer ist, als bei einem realen Modell-Bilddarstellungssystem, und die Bildsteuerdaten der Ansprüche 2 bis 9, soweit von Anspruch 2 abhängig, in ein dem realen Modell-Bilddarstellungssystem entsprechendes reales Bilddarstellungssystem eingegeben werden.

12. Programm, das, wenn es auf einem Computer läuft oder in einen Computer geladen ist, den Computer veranlasst das Verfahren nach einem der Ansprüche 1 bis 11 durchzuführen.

13. Speichermedium für ein Computerprogramm mit dem Programm nach Anspruch 12.

14. Drucker oder Scanner mit einer Steuereinrichtung, die eines der Verfahren nach Anspruch 1 bis 11 durchführt.

15. Drucker nach Anspruch 14, wobei die unter Verwendung des Verfahrens nach Anspruch 2 berechneten Bildsteuerdaten in die Steuereinrichtung des Druckers eingegeben werden und das Modell-Bilddarstellungssystem die Eigenschaften des Druckers und des vom Drucker verwendeten Mediums wiederspiegelt.

16. Fotolabor, insbesondere Minilab oder Gerät für Großlabor mit einer Steuereinrichtung oder einem Computer, die bzw. der das Verfahren nach einem der Ansprüche 1 bis 11 durchführt, und/oder mit einem Drucker oder Scanner nach Anspruch 14 oder 15.

17. Verwendung eines Modells für ein Bilddarstellungssystem zur Erzeugung von Fotobildern in einem Verfahren, einer Vorrichtung, einem Programm oder einem Geschäftsmodell, wobei die fotografischen Bilder durch Lichtmodulatoren dargestellt werden, die die Intensität und/oder das Spektrum des einfallenden Lichts modulieren und deren Lichtmodulationswerte die Lichtmodulation durch die Lichtmodulatoren beschreiben und wobei das Modell-Bilddarstellungssystem in Antwort auf Bildsteuerdaten die Lichtmodulationswerte der Lichtmodulatoren bestimmt, wobei das Modell folgendes umfasst:

eine Beziehung zwischen Lichtmodulationswerte ($C_i$) wird basierend auf eingegebenen Bildsteuerdaten durch Modellierung der Antwort des Modell-Bilddarstellungssystems auf die eingegebenen Bildsteuerdaten hergestellt, und
eine Beziehung zwischen Modulations-Farbwerten ($S213, S214$) eines Bildes und den Lichtmodulationswerten ($C_i$) wird basierend auf einem modellierten Lichteinfall auf die Lichtmodulatoren hergestellt.

18. Verwendung nach Anspruch 17, bei welchem das Modell Verfahrensschritte zumindest nach einem der Ansprüche 1 bis 11 verwendet.

Fig. 1

Fig. 2: erstes Verfahren

FilmScanner

Schritt 0

S201
Relative Scanner
Intensitäten $I_i/I0$

Logarithmierung: S202
$D_{input}(i) = \log_{10}(I_i/I_0)$

S203
Unverarbeitete
Filmdichten $D_{input}(i)$

Optimierungs- S204
transformation
$D_{film} = A\ D_{input} + c$

Normalisierte,
optimierte Filmdichten
$D_{film}(i)$
(filmtypunabhängig)
S205

Papiermodell

Schritt 1
Medium-Uebersprechen
$D^*_{film} = P\ D_{film}$
S206

$D^*_{film}$

Farbstoffkonzentration als
Funktion der Belichtungsdichte
$C_i = f(D^*_{film}(i))$
S207

Farbstoffkonzentrationen
$C_i$

Schritt 2
Farbaufbau S210
(z.B. Kubelka-Munk Ansatz)

Reflexionsspektren $R_k$

Faltung mit Gewichtskurven des Standardbeobachters und Transformation in CIE-Lab S211

Faltung mit Status-A
Gewichtskurven und
Logarithmierung
S212

Farbraum- S213
Plattform (CIE-Lab)

Papierdichten CMY
(Status A) S214
(für Kalibration)

EP 1 227 659 A1

**Invertiertes Papiermodell**

Farbraum- S301
Plattform (Lab)

Papierdichten
(Status A)
(für Kalibration)
S307

Umkehrfunktion von
$C_l$->Spektren $R_k$->Lab
S302

Umkehrfunktion von
$C_l$->Spektren $R_k$->CMY
S308

Farbstoffkonzentrationen
$C_l$    S303

Belichtungsdichte als Funktion
der Farbstoffkonzentration
$E^{\cdot}(i) = f^{-1}(C_l)$    S304

$E^{\cdot}$

Umkehrfunktion des
Medium-Uebersprechens
$E = P^{-1} E^{\cdot}$    S305

Belichtungsdichten
$E_i$
(Steuerwerte für Printer)
S306

Photo-Printer
(DMD, Laser, LCD, CRT)

Fig. 3

EP 1 227 659 A1

EP 1 227 659 A1

Fig. 4

24

**Europäisches Patentamt**

# EUROPÄISCHER RECHERCHENBERICHT

Nummer der Anmeldung

EP 01 10 1128

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| A | US 4 979 032 A (GIORGIANNI EDWARD J ET AL) 18. Dezember 1990 (1990-12-18) * Zusammenfassung; Abbildung 2A * --- | 1,2,17 | H04N1/60 |
| A | EP 0 817 470 A (FUJIFILM ELECTRONIC IMAGING LI) 7. Januar 1998 (1998-01-07) * Zusammenfassung; Abbildungen * --- | 1,2,17 | |
| A | WO 01 01672 A (IMATION CORP) 4. Januar 2001 (2001-01-04) * Zusammenfassung; Abbildungen * ----- | 1,2,17 | |

**RECHERCHIERTE SACHGEBIETE (Int.Cl.7)**

H04N

Der vorliegende Recherchenbericht wurde für alle Patentansprüche erstellt

| Recherchenort | Abschlußdatum der Recherche | Prüfer |
|---|---|---|
| DEN HAAG | 9. August 2001 | Isa, S |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 01 10 1128

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

09-08-2001

| Im Recherchenbericht angeführtes Patentdokument | Datum der Veröffentlichung | Mitglied(er) der Patentfamilie | Datum der Veröffentlichung |
|---|---|---|---|
| US 4979032 A | 18-12-1990 | KEINE | |
| EP 0817470 A | 07-01-1998 | JP 10079023 A<br>US 5933254 A | 24-03-1998<br>03-08-1999 |
| WO 0101672 A | 04-01-2001 | KEINE | |

EPO FORM P0461

Für nähere Einzelheiten zu diesem Anhang : siehe Amtsblatt des Europäischen Patentamts, Nr.12/82